(19) Europäisches Patentamt / European Patent Office / Office européen des brevets

(11) **EP 4 130 050 B1**

(12) # EUROPEAN PATENT SPECIFICATION

(45) Date of publication and mention of the grant of the patent:
**09.10.2024 Bulletin 2024/41**

(21) Application number: **21779762.0**

(22) Date of filing: **02.04.2021**

(51) International Patent Classification (IPC):
***C08C 19/00*** *(2006.01)* ***C08C 19/22*** *(2006.01)*
***C08C 19/25*** *(2006.01)* ***C08F 236/10*** *(2006.01)*
***C08F 236/14*** *(2006.01)* ***C08L 15/00*** *(2006.01)*
***C08K 3/04*** *(2006.01)* ***C08K 3/013*** *(2018.01)*
***C08K 3/36*** *(2006.01)* ***C08F 236/06*** *(2006.01)*
***C08C 19/44*** *(2006.01)* ***C08K 5/00*** *(2006.01)*

(52) Cooperative Patent Classification (CPC):
(C-Sets available)
**C08C 19/22; C08C 19/25; C08C 19/44; C08F 236/06; C08F 236/10; C08K 3/013; C08K 3/04; C08K 3/36; C08K 5/0016; C08L 15/00;**
Y02T 10/86 (Cont.)

(86) International application number:
**PCT/JP2021/014381**

(87) International publication number:
**WO 2021/201289 (07.10.2021 Gazette 2021/40)**

(54) **CONJUGATED DIENE POLYMER, METHOD FOR MANUFACTURING CONJUGATED DIENE POLYMER, CONJUGATED DIENE POLYMER COMPOSITION, AND RUBBER COMPOSITION**

KONJUGIERTES DIENPOLYMER, VERFAHREN ZUR HERSTELLUNG EINES KONJUGIERTEN DIENPOLYMERS, KONJUGIERTE DIENPOLYMERZUSAMMENSETZUNG UND KAUTSCHUKZUSAMMENSETZUNG

POLYMÈRE DE DIÈNE CONJUGUÉ, PROCÉDÉ DE PRODUCTION DE POLYMÈRE DE DIÈNE CONJUGUÉ, COMPOSITION DE POLYMÈRE DE DIÈNE CONJUGUÉ ET COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2020 JP 2020067842**
**07.04.2020 JP 2020068843**

(43) Date of publication of application:
**08.02.2023 Bulletin 2023/06**

(73) Proprietor: **Asahi Kasei Kabushiki Kaisha**
**Tokyo 1000006 (JP)**

(72) Inventors:
- **USHIO, Takaaki**
  **Tokyo 100-0006 (JP)**
- **TOBO, Shuri**
  **Tokyo 100-0006 (JP)**
- **HISAMURA, Kenta**
  **Tokyo 100-0006 (JP)**
- **SUMITANI, Shogo**
  **Tokyo 100-0006 (JP)**
- **SEKIKAWA, Shinichi**
  **Tokyo 100-0006 (JP)**
- **ARAKI, Yoshifumi**
  **Tokyo 100-0006 (JP)**

(74) Representative: **Strehl Schübel-Hopf & Partner**
**Maximilianstrasse 54**
**80538 München (DE)**

(56) References cited:
**EP-A1- 3 617 237** **EP-A2- 3 845 568**
**WO-A1-2020/070961** **WO-A1-2021/024811**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**WO-A1-2021/044921** **JP-A- 2015 500 374**
**JP-A- 2020 037 676** **US-A1- 2019 203 021**

(52) Cooperative Patent Classification (CPC): (Cont.)

C-Sets
**C08F 236/06, C08F 2/06;**
**C08F 236/06, C08F 4/48;**
**C08F 236/10, C08F 2/06;**
**C08F 236/10, C08F 4/48;**
**C08K 3/013, C08L 15/00;**
**C08K 3/04, C08L 15/00;**
**C08K 3/36, C08L 15/00;**
**C08K 5/0016, C08L 15/00;**
**C08L 15/00, C08L 91/00, C08L 9/00, C08K 3/36, C08K 3/04, C08K 5/548, C08K 3/22, C08K 5/09, C08K 5/18, C08K 3/06, C08K 5/47, C08K 5/31;**
C08F 236/06, C08F 212/08

## Description

### Technical Field

The present invention relates to a conjugated diene-based polymer, a production method for a conjugated diene-based polymer, a conjugated diene-based polymer composition, and a rubber composition.

### Background Art

In recent years, there has been an increasing demand for reduction of fuel consumption in vehicles, and improvement of rubber materials used in a vehicle tire, particularly, in a tire tread coming in contact with a road surface is required.

Besides, owing to increasing requirements for fuel economy regulations for vehicles, there are increasing requirements for using resins for vehicle members, and reducing the thickness of a tire for purposes of weight reduction of vehicles.

For reducing the thickness of a tire, it is necessary to reduce the thickness of a tread portion having a high material ratio in the entire tire and coming in contact with a road surface, and there is a demand for a rubber material more excellent in abrasion resistance more than ever.

In addition, in order to reduce energy loss caused by tires during driving, a material having low rolling resistance, namely, having a low hysteresis loss property, is preferred as a rubber material used in a tread.

Furthermore, from the viewpoint of safety, a tire material is required to have practically sufficient fracture strength.

An example of a rubber material meeting the aforementioned requirements includes a rubber composition containing a rubber-like polymer and a reinforcing filler such as carbon black and silica.

In such a rubber composition, an attempt has been made to reduce a hysteresis loss and to improve abrasion resistance and fracture strength by improving dispersibility of silica in the rubber composition through introduction of a functional group having affinity or reactivity with silica into a molecular end of a rubber-like polymer having high mobility, and furthermore, by reducing the mobility of the molecular end of the rubber-like polymer.

For example, Patent Literatures 1 to 3 disclose a composition of a modified conjugated diene-based polymer obtained by reacting an alkoxysilane having an amino group with a conjugated diene-based polymer active end, and silica. Besides, Patent Literature 4 discloses a low vinyl modified conjugated diene-based polymer.

EP3617237A1 relates to a modified conjugated diene-based polymer, a polymer composition and a rubber composition.

### Citation List

#### Patent Literature

Patent Literature 1: Japanese Patent Laid-Open No. 2005-290355
Patent Literature 2: Japanese Patent Laid-Open No. H11-189616
Patent Literature 3: Japanese Patent Laid-Open No. 2003-171418
Patent Literature 4: Japanese Patent No. 6512240

### Summary of Invention

#### Technical Problem

The present inventors have examined conventional rubber compositions including those of Patent Literatures 1 to 4, and found that the conventional rubber compositions are insufficient in their physical properties. For example, in a conventional conjugated diene-based polymer, surface coarseness or sheet breakage is easily caused when formed into a sheet after kneading, and thus processability is insufficient. In addition, when such a material is vulcanized, in particular, formed into a vulcanizate containing an inorganic filler such as silica, dispersibility of silica is lowered, and abrasion resistance and a low hysteresis loss property are not sufficient.

In addition, for producing a conventional conjugated diene-based polymer, it is necessary not to add a polar compound to a polymer system, or to add it in a very small amount. When polymerization is performed under this condition, a polymerization active end of the polymer is easily deactivated, and hence it is difficult to react an end of the polymer (polymerization terminal end) with a modifier. In other words, there arise problems that it is difficult to increase

a modification ratio, and that it is difficult to sufficiently reduce a hysteresis loss property.

Accordingly, an object of the present invention is to provide a conjugated diene-based polymer excellent in processability in vulcanization, and is excellent in abrasion resistance and a low hysteresis loss property of a vulcanizate obtained therefrom, a method for producing the conjugated diene-based polymer, a conjugated diene-based polymer composition, and a rubber composition. Solution to Problem

The present inventors have made earnest studies to solve the above-described problems, resulting in finding that a conjugated diene-based polymer containing a portion derived from an aromatic vinyl compound in a prescribed ratio, and having a branch number (Bn) and a content of a specific vinyl bond respectively falling in prescribed ranges is excellent in processability in vulcanization, and is excellent in abrasion resistance and a low hysteresis loss property of a vulcanizate obtained therefrom, and thus, the present invention has been accomplished. The present invention concerns a conjugated diene-based polymer, a method producing the conjugated diene-based polymer, a conjugated diene-based polymer composition, and a rubber composition comprising said conjugated diene-based polymer as disclosed in the claims.

Advantageous Effects of Invention

According to the present invention, a conjugated diene-based polymer excellent in processability in vulcanization, and excellent in abrasion resistance and a low hysteresis loss property of a vulcanizate obtained therefrom, a method for producing a conjugated diene-based polymer, a conjugated diene-based polymer composition, and a rubber composition can be provided. Description of Embodiment

Now, an embodiment for practicing the present invention (hereinafter referred to as the "present embodiment") will be described in detail.

[Conjugated Diene-based Polymer]

A conjugated diene-based polymer of the present embodiment has a branch number (Bn) measured by viscosity detector-equipped GPC-light scattering measurement of 7 or more, has an amount of bound aromatic vinyl of 1% by mass or more and 32% by mass or less, and a content of vinyl bond in bound conjugated diene of 11% by mol or more and 35% by mol or less.

(Amount of Bound Aromatic Vinyl and Content of Vinyl Bond in Bound Conjugated Diene)

The conjugated diene-based polymer of the present embodiment is a copolymer of at least one conjugated diene compound and at least one aromatic vinyl compound. In a microstructure of the conjugated diene-based polymer, the lower limit of the amount of bound aromatic vinyl is 1% by mass, preferably 2% by mass, more preferably 3% by mass, and further preferably 5% by mass with respect to the entire conjugated diene-based polymer. The lower limit may be 7% by mass. The upper limit of the amount of bound aromatic vinyl is 32% by mass, preferably 31% by mass, and more preferably 30% by mass. The upper limit of the amount of bound aromatic vinyl may be 29% by mass, 28% by mass, 27% by mass, or 26% by mass. When the amount of bound aromatic vinyl falls in the above-described range, a vulcanizate of the conjugated diene-based polymer is more excellent in abrasion resistance and a low hysteresis loss property. The amount of bound aromatic vinyl may fall in a range obtained by arbitrarily combining any of the upper limits and any of the lower limits, and may be, for example, 1% by mass or more and 30% by mass or less. Herein, the term "amount of bound aromatic vinyl" means a content of a portion derived from the aromatic vinyl compound in the entire conjugated diene-based polymer.

In the microstructure of the conjugated diene-based polymer, the amount of bound conjugated diene is preferably 50% by mass or more and 99% by mass or less, more preferably 55% by mass or more and 98% by mass or less, and further preferably 60% by mass or more and 95% by mass or less in the entire conjugated diene-based polymer. When the amount of bound conjugated diene falls in the above-described range, a vulcanizate of the conjugated diene-based polymer is further excellent in abrasion resistance and a low hysteresis loss property. The amount of bound conjugated diene may be, within the above-described range, 99% by mass or less, 98% by mass or less, 97% by mass or less, 95% by mass or less, or 93% by mass or less. The amount of bound conjugated diene may be, within the above-described range, 65% by mass or more, 68% by mass or more, 69% by mass or more, 70% by mass or more, 71% by mass or more, 72% by mass or more, 73% by mass or more, or 74% by mass or more. The amount of bound conjugated diene may fall in a range obtained by arbitrarily combining any of the upper limits and any of the lower limits. Herein, the term "amount of bound conjugated diene" means a content of a portion derived from the conjugated diene compound in the entire conjugated diene-based polymer.

In the microstructure of the conjugated diene-based polymer, the content of vinyl bond in the bound conjugated diene (hereinafter, simply referred to also as "content of vinyl bond") is 11% by mol or more and 35% by mol or less,

preferably 12% by mol or more and 34% by mol or less, more preferably 13% by mol or more and 33% by mol or less, and further preferably 15% by mol or more and 30% by mol or less in the entire bound conjugated diene. When the content of vinyl bond falls in the above-described range, the conjugated diene-based polymer is increased in linearly in the structure of a conjugated diene portion, and increased in entanglement among polymer chains, and hence is further excellent in abrasion resistance. Besides, when the content of vinyl bond falls in the above-described range, a vulcanizate obtained therefrom is more excellent in a low hysteresis loss property. The content of vinyl bond may fall in a range obtained by arbitrarily combining any of the upper limits and any of the lower limits, and may be, for example, 11% by mol or more and 30% by mol or less. Herein, the term "content of vinyl bond in bound conjugated diene" means a ratio of a portion having a vinyl bond in the portion derived from the conjugated diene compound (hereinafter referred to as the "bound conjugated diene").

The content of vinyl bond in the bound conjugated diene can be controlled by appropriately adjusting, in a polymerization reaction for obtaining the conjugated diene-based polymer, a reaction temperature, an amount of a polar compound to be added described below, and the like. Specifically, there is a tendency that the content of vinyl bond can be reduced by setting high the reaction temperature in the polymerization reaction for obtaining the conjugated diene-based polymer. Besides, there is a tendency that the content of vinyl bond can be reduced by reducing the amount of the polar compound to be added described below. More specifically, a conjugated diene-based polymer having the content of vinyl bond falling in the above-described range can be easily obtained by employing a production method described below.

The relationship between a value, expressed in % by mass, of the amount of bound aromatic vinyl and a value, expressed in % by mol, of the content of vinyl bond is not especially limited, and the amount of bound aromatic vinyl may be larger, the content of vinyl bond may be larger, or these may be equivalent. From the viewpoint of further improving tensile strength of the conjugated diene-based polymer or a vulcanizate obtained therefrom and abrasion resistance, the value, expressed in % by mass, of the amount of bound aromatic vinyl is preferably larger than the value, expressed in % by mol, of the content of vinyl bond. The value of the amount of bound aromatic vinyl may be larger than the content of vinyl bond by 1 or more, 2 or more, 3 or more, 4 or more, 5 or more, 6 or more, or 7 or more.

Here, the amount of bound aromatic vinyl can be calculated by measuring UV absorption of a phenyl group contained in the portion derived from the aromatic vinyl compound (hereinafter referred to as the "bound aromatic vinyl") of the conjugated diene-based polymer. When the conjugated diene-based polymer consists of bound aromatic vinyl and bound conjugated diene, the amount of the bound conjugated diene can be obtained based on the amount of the bound aromatic vinyl obtained as described above. Specifically, it may be measured by a method described in examples below.

When the conjugated diene-based polymer is a copolymer of butadiene and styrene, the content of vinyl bond (content of 1,2-bond) in bound butadiene may be obtained by Hampton method (R. R. Hampton, Analytical Chemistry, 21, 923 (1949)). Specifically, it may be measured by a method described in the examples below.

The conjugated diene-based polymer of the present embodiment preferably contains a few or no blocks in which 30 or more bound aromatic vinyl units are chained. When the copolymer is a butadiene-styrene copolymer, the content of such blocks in each of which 30 or more bound aromatic vinyl units are chained in the conjugated diene-based polymer can be measured by employing a known method in which the copolymer is decomposed by Kolthoff method (a method described by I. M. Kolthoff, et al., J. Polym. Sci. 1, 429 (1946)) to analyze the amount of polystyrene insoluble in methanol. The content of the blocks in each of which 30 or more bound aromatic vinyl units are chained measured by such a method is preferably 5.0% by mass or less, and more preferably 3.0% by mass or less with respect to the total amount of the conjugated diene-based polymer.

From the viewpoint of further improving low fuel consumption performance, in the conjugated diene-based polymer of the present embodiment, a larger proportion of the bound aromatic vinyl units is preferably present singly. Specifically, if the copolymer is a butadiene-styrene copolymer, when the copolymer is decomposed by employing a method through ozonolysis of a method of Tanaka et al., (Polymer, 22, 1721 (1981)) to analyze a styrene chain distribution by gel permeation chromatography (hereinafter also referred to as "GPC"), it is preferable that the amount of isolated styrene, with respect to the total amount of bound styrene, is 40% by mass or more, and that the amount of a chain styrene structure consisting of 8 or more chained styrene is 5.0% by mass or less. A vulcanizate obtained from such a conjugated diene-based polymer is more excellent in a low hysteresis loss property.

The amount of bound aromatic vinyl, the amount of bound conjugated diene, and the content of vinyl bond also affect a glass transition temperature (hereinafter also referred to as the "Tg") of the conjugated diene-based polymer. Accordingly, it is preferable to cause the amount of bound aromatic vinyl, the amount of bound conjugated diene, and the content of vinyl bond to respectively fall in the above-described ranges also from the viewpoint that a vulcanizate obtained therefrom is further excellent in a low hysteresis loss property. When the amount of bound aromatic vinyl is increased, the Tg of the conjugated diene-based polymer tends to be increased. Alternatively, when the content of vinyl bond is reduced, the glass transition temperature tends to be lowered.

(Glass Transition Temperature)

The glass transition temperature (Tg) of the conjugated diene-based polymer of the present embodiment is preferably -85°C or more, more preferably -80°C or more, and further preferably -75°C or more. When the glass transition temperature falls in the above-described range, processability in vulcanization is further excellent. Besides, the glass transition temperature is preferably -35°C or less, and more preferably -38°C or less. The glass transition temperature may be -40°C or less, or -45°C or less. When the glass transition temperature falls in the above-described range, a vulcanizate of the conjugated diene-based polymer is further excellent in abrasion resistance and a low hysteresis loss property. The glass transition temperature may fall in a range obtained by arbitrarily combining any of the upper limits and any of the lower limits. The conjugated diene-based polymer and the glass transition temperature of the conjugated diene-based polymer are measured in accordance with ISO 22768: 2017. More specifically, a DSC curve is recorded by measuring differential scanning calorimetry (DSC) with a temperature increased within a prescribed range, and a peak top (infection point) of a DSC differential curve thus obtained is defined as the glass transition temperature. Specifically, it may be measured by a method described in the examples below.

(Branch Number (Bn))

From the viewpoint of improving processability, abrasion resistance, and fracture strength, the conjugated diene-based polymer of the present embodiment has a branch number (Bn) measured by viscosity detector-equipped GPC-light scattering measurement (hereinafter simply referred to as the "branch number (Bn)", "branch number" or "Bn") of 7 or more.

The branch number (Bn) being 7 or more means that the conjugated diene-based polymer of the present embodiment has 7 or more polymer chains as side chains with respect to a substantially longest polymer main chain.

In general, a branch number (Bn) is an index expressing a branch structure of a polymer. For example, in a general 4-branched star polymer (polymer having 4 polymer chains (not having a further side chain) connected to a center portion), 2 polymer chain arms (side chains) are bonded to a longest polymer main chain, and hence the branch number (Bn) is evaluated as 2.

In a general 8-branched star polymer (polymer having 8 polymer chains (not having a further side chain) connected to a center portion), 6 polymer chain arms (side chains) are bonded to a longest polymer main chain, and hence the branch number (Bn) is evaluated as 6.

The conjugated diene-based polymer of the present embodiment has the branch number (Bn) of 7 or more, which means that the number of branches is 9 or more if the conjugated diene-based polymer has a star polymer structure.

Here, the "branch" means one formed by a bond, to one polymer chain, of another polymer chain. Besides, the "branch number (Bn)" corresponds to the number of polymer chains directly or indirectly bonded to a longest polymer main chain. In other words, not only side chains bonded to the longest polymer chain but also, if the side chains are further branched, the number of branches of the side chains are taken into consideration. Accordingly, when one polymer chain is bonded as a side chain to the longest polymer chain, and another polymer chain is further bonded to the side chain, the branch number is 2.

Herein, the branch number (Bn) is calculated by using a contracting factor (g') in accordance with an expression, $g' = 6Bn/\{(Bn + 1)(Bn + 2)\}$. Here, the contracting factor (g') is a value defined as follows.

In general, a polymer having a branch tends to have a smaller size of a molecule when compared with a straight-chain polymer having the same absolute molecular weight. Here, the term "size of a molecule" refers to a volume substantially occupied by the molecule. The contracting factor (g') relatively expresses the size of a molecule of a target polymer, and is an index of a ratio of the size of the molecule of the target polymer to a size of a molecule of a straight-chain polymer having the same absolute molecular weight as the target polymer. In other words, when the branch number of a polymer is high, the size is relatively small, and hence the contracting factor (g') tends to be small.

Here, it is known that there is a correlation between the molecule size of a polymer and a ratio of an intrinsic viscosity, and therefore, in the present embodiment, the contracting factor (g') is calculated as a ratio of the intrinsic viscosity. In other words, the contracting factor (g') is calculated as a ratio ($[\eta]/[\eta_0]$) of an intrinsic viscosity $[\eta]$ of the target polymer to an intrinsic viscosity $[\eta_0]$ of a straight-chain polymer having the same absolute molecular weight as the target polymer.

It is known that the intrinsic viscosity $[\eta_0]$ of a straight chain polymer satisfies a relationship, $[\eta_0] = -3.626\ M^{0.730}$. In this expression, M represents an absolute molecular weight. Accordingly, when the absolute molecular weight M and the intrinsic viscosity $[\eta]$ of the target polymer are measured by viscosity detector-equipped GPC-light scattering measurement, the contracting factor (g') and the branch number (Bn) can be obtained. The thus calculated branch number (Bn) accurately expresses the number of polymer chains directly or indirectly bonded to a longest polymer main chain.

Here, the term "absolute molecular weight" means a molecular weight measured by a light scattering method.

As described above, a polymer having a branch tends to have a smaller size of a molecule when compared with a straight-chain polymer having the same absolute molecular weight in general. Therefore, in employing a GPC measurement method in which a molecular weight is obtained by relative comparison with a standard polystyrene sample with a polymer screened in accordance with the size of a molecule, the molecular weight of a polymer having a branch structure tends to be underestimated. On the other hand, in the light scattering method, a molecular weight is measured by directly observing a molecule. Accordingly, in employing the light scattering method, a molecular weight can be accurately measured without being affected by the polymer structure or by interaction with a column filler. It is noted that an absolute molecular weight may be measured by a method described in the examples.

The term "intrinsic viscosity" means a viscosity [$\eta$] obtained ideally in accordance with the following expression (I). In the expression (I), $\eta_1$ represents a viscosity obtained when a target polymer is dissolved in a solvent in a concentration c, and $\eta_2$ represents a viscosity of the solvent.

Herein, as the intrinsic viscosity, a value measured by a method described in the examples is used.

$$[\eta] = \lim_{c \to 0}\left\{\frac{\eta_1 - \eta_2}{c\eta_2}\right\} \quad (\mathrm{I})$$

Since the conjugated diene-based polymer of the present embodiment has a branch number (Bn) of 7 or more, the polymer is very excellent in processability in vulcanization, and the vulcanizate obtained therefrom is excellent in abrasion resistance and fracture strength. This is probably for, but not limited to, the following reason.

In general, when the absolute molecular weight of a polymer having a low branch number is increased, there arises a problem that a viscosity in vulcanization is so largely increased that processability in the vulcanization is largely deteriorated. Therefore, in a polymer having a low branch number, even when a large number of functional groups are introduced into the polymer for purposes of improving affinity and/or reactivity with silica to be blended as a filler, the silica cannot be sufficiently dispersed in the polymer in kneading process. As a result, the function of the introduced functional groups cannot be exhibited, and the effect of improving a low hysteresis loss property through the introduction of the functional groups cannot be exhibited.

On the other hand, since the conjugated diene-based polymer of the present embodiment has a branch number (Bn) of 7 or more, the increase of the viscosity in vulcanization caused through the increase of the absolute molecular weight is largely suppressed. Accordingly, for example, the polymer can be sufficiently mixed with a filler such as silica in kneading process, and hence the silica can be sufficiently dispersed in the polymer. In other words, the conjugated diene-based polymer of the present embodiment is good in processability. As a result, for example, the average molecular weight of the conjugated diene-based polymer can be further increased, and thus, abrasion resistance and fracture strength can be improved. In addition, since the silica can be satisfactorily dispersed in the polymer through sufficient kneading, a practically sufficient low hysteresis loss property is obtained.

The branch number (Bn) of the conjugated diene-based polymer of the present embodiment is 7 or more, preferably 8 or more, and more preferably 9 or more. When the branch number (Bn) falls in the above-described range, the conjugated diene-based polymer is more excellent in processability in vulcanization. The branch number (Bn) may be 10 or more, 11 or more, 12 or more, or 13 or more.

The upper limit of the branch number (Bn) is not especially limited, and may be equal to or larger than a detection limit. The branch number (Bn) is preferably 84 or less, more preferably 80 or less, further preferably 64 or less, and still further preferably 57 or less. When the branch number (Bn) falls in the above-described range, the conjugated diene-based polymer tends to be further excellent in abrasion resistance of a vulcanizate obtained therefrom. It is noted that the upper limit of the branch number (Bn) may be 50, may be 40, may be 30, may be 25, may be 20, or may be 18.

The branch number of the conjugated diene-based polymer may be controlled by appropriately adjusting the amount of a branching agent to be added described below, or may be controlled by adjusting a compounding amount of the amount of the branching agent to be added and the amount of a coupling modifier to be added described below. Specifically, the branch number can be controlled in accordance with the numbers of functional groups of the branching agent and the coupling modifier, the amounts of the branching agent and the coupling modifier to be added, and timing of adding the branching agent and the coupling modifier. More specifically, the branch number can be more easily caused to fall in the above-described range by employing a method for producing a conjugated diene-based polymer described below.

(Conjugated Diene Compound and Aromatic Vinyl Compound)

The conjugated diene-based polymer of the present embodiment is a copolymer of at least one conjugated diene compound and at least one aromatic vinyl compound. Accordingly, the conjugated diene-based polymer may be a copolymer of one or a plurality of conjugated diene compounds, and one or a plurality of aromatic vinyl compounds.

The conjugated diene compound is not especially limited, and examples include 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred from the viewpoint that the effects of the present embodiment are effectively and definitely exhibited. One of these conjugated diene compounds may be singly used, or two or more of these may be used together.

The aromatic vinyl compound is not especially limited, and examples include styrene, p-methylstyrene, α-methylstyrene, vinylethylbenzene, vinylxylene, vinylnaphthalene, and diphenylethylene. Among these, styrene is preferred from the viewpoint that the effects of the present embodiment are effectively and definitely exhibited. One of these aromatic vinyl compounds may be singly used, or two or more of these may be used together.

(Modification Ratio)

The conjugated diene-based polymer of the present embodiment preferably has a modifying group. The term "modifying group" means a specific functional group having affinity or binding reactivity with a filler. Since the conjugated diene-based polymer has such a modifying group, the interaction with a filler is further improved, and hence, when a conjugated diene-based polymer composition containing the conjugated diene-based polymer and the filler is obtained, mechanical strength of the composition is further improved. From a similar viewpoint, the conjugated diene-based polymer of the present embodiment more preferably has a modifying group having an atom except for a carbon atom and a hydrogen atom, further preferably has a modifying group having a silicon atom or a nitrogen atom, and still further preferably has a modifying group having a nitrogen atom.

The conjugated diene-based polymer of the present embodiment can be modified by reacting the copolymer of a conjugated diene compound and an aromatic vinyl compound with a modifier. The conjugated diene-based polymer is modified preferably with a coupling modifier described below. A modified conjugated diene-based polymer thus obtained not only has a specific functional group having affinity or binding reactivity with a filler but also tends to have a higher branch number (Bn). From the viewpoint of further improving the affinity or binding reactivity with a filler, at least one end of the conjugated diene-based polymer is modified with a nitrogen atom-containing group in the conjugated diene-based polymer.

Herein, the term "modification ratio" refers to a content, expressed in % by mass, of a modified conjugated diene-based polymer component having, in a polymer molecule, a specific functional group having affinity or binding reactivity with a filler to the total amount of a mixture of conjugated diene-based polymers when the mixture of a modified conjugated diene-based polymer and a non-modified conjugated diene-based polymer is obtained by modifying the conjugated diene-based polymer with a modifier. Accordingly, when the specific functional group contains a nitrogen atom, the term indicates a mass ratio of a conjugated diene-based polymer containing a nitrogen atom to the total amount of the mixture of the conjugated diene-based polymers.

Herein, the term "conjugated diene-based polymer" encompasses a non-modified conjugated diene-based polymer and a modified conjugated diene-based polymer except where specifically noted, or except where they are definitely distinguished as in a case where they are together described like "a conjugated diene-based polymer or a modified conjugated diene-based polymer." When they are together described like "a conjugated diene-based polymer or a modified conjugated diene-based polymer", the term "conjugated diene-based polymer" means a non-modified conjugated diene-based polymer.

For example, in a conjugated diene-based polymer containing a modified conjugated diene-based polymer having been modified by reacting a terminal end of a conjugated diene-based polymer with a nitrogen atom-containing modifier, a mass ratio of a modified conjugated diene-based polymer having a nitrogen atom-containing functional group derived from the nitrogen atom-containing modifier to the total amount of conjugated diene-based polymers corresponds to a modification ratio.

It is preferable that at least a part of the conjugated diene-based polymer of the present embodiment is modified with a nitrogen atom-containing functional group. Such a modified conjugated diene-based polymer is further excellent in processability in obtaining a composition with a filler and the like compounded, and is also further excellent in abrasion resistance, fracture strength, and a low hysteresis loss property obtained in a vulcanizate formed from the composition.

From the viewpoint of further improving processability in vulcanization, and further improving abrasion resistance, fracture strength, and a low hysteresis loss property of a vulcanizate obtained therefrom, the modification ratio of the conjugated diene-based polymer of the present embodiment is preferably 50% by mass or more, more preferably 60% by mass or more, further preferably 70% by mass or more, still further preferably 75% by mass or more, and particularly preferably 80% by mass or more with respect to the total amount of the conjugated diene-based polymers. The upper limit of the modification ratio is not especially limited, and may be, for example, 100% by mass, 98% by mass, 95% by mass, or 90% by mass. In comparison among conjugated diene-based polymers having the same glass transition temperature, one having a higher modification ratio tends to be better in a low hysteresis loss property.

In the present embodiment, the modification ratio can be measured by chromatography capable of separating

a functional group-containing modified component and a non-modified component. As a method using the chromatography, a method in which a column for gel permeation chromatography using, as a filler, a polar material adsorbing a specific functional group, such as silica, is used for performing quantitative determination using an internal standard of a non-adsorbed component for comparison (column adsorption GPC method) can be employed.

More specifically, the modification ratio is obtained by measuring an amount of adsorption onto a silica-based column based on a difference between a chromatogram measured on a sample solution containing a sample and low molecular weight internal standard polystyrene using a polystyrene-based gel column and a chromatogram measured on the sample solution using the silica-based column. More specifically, the modification ratio may be measured by a method described in the examples.

In the conjugated diene-based polymer of the present embodiment, the modification ratio can be controlled by adjusting the amount of a modifier to be added, and a method for reacting the conjugated diene compound and the modifier.

For example, a method in which polymerization is performed by using, as a polymerization initiator, an organic lithium compound, described later, having at least one nitrogen atom in a molecule, a method in which a monomer having at least one nitrogen atom in a molecule is copolymerized, and a method in which a modifier having a structural formula described below is used may be combined.

(Branch Structure)

The conjugated diene-based polymer of the present embodiment has a star polymer structure preferably having 3 or more branches. Such a conjugated diene-based polymer tends to have a high branch number. From a similar viewpoint, the conjugated diene-based polymer has a star polymer structure having more preferably 4 or more branches, further preferably 6 or more branches, and particularly preferably 7 or more branches.

Herein, the term "star polymer structure" refers to a structure in which 3 or more polymer chains (arms) are bonded to one central branch point. The term "central branch point" refers to a modifier-derived portion when 3 or more polymer chains are bonded to the modifier-derived portion (atom or atomic group). Accordingly, a modified conjugated diene-based polymer having been modified with a coupling modifier described below has a star polymer structure in which 3 or more conjugated diene-based polymers are bonded to a central branch point of a portion (atom or atomic group) derived from the coupling modifier.

The term "star polymer structure having n branches" (wherein n is a natural number) refers to a structure in which n polymer chains are bonded to a central branch point, regardless of whether or not the bound polymer chains are further branched. Accordingly, a star polymer structure having n branches in which n polymer chains without branches are bonded to a central branch portion has a branch number (Bn) of n - 2.

The star polymer structure can be obtained by modifying a conjugated diene-based polymer with a modifier, more preferably with a coupling modifier described below. In other words, when a conjugated diene-based polymer and a coupling modifier are reacted with each other, a plurality of polymer chains of the conjugated diene-based polymer are bonded to a central branch point of the coupling modifier, and thus, a modified conjugated diene-based polymer having a star polymer structure can be obtained. The number of branches of a star polymer structure can be controlled by adjusting the number of functional groups of the coupling modifier, and the amounts of a polymerization initiator and the coupling modifier to be added.

In the conjugated diene-based polymer of the present embodiment, at least one branched chain of the star polymer structure is preferably further branched. Such a conjugated diene-based polymer tends to have a further higher branch number (Bn). From a similar viewpoint, in the conjugated diene-based polymer of the present embodiment, preferably a half or more of branched chains of the star polymer structure are further branched, and more preferably all the branched chains of the star polymer structure are further branched.

From a similar viewpoint, in the conjugated diene-based polymer, at least on branched chain of the star polymer structure has more preferably 2 or more branch points, and further preferably 3 or more branch points. From a similar viewpoint, in the conjugated diene-based polymer, a branch point of the branched chain of the star polymer structure is preferably a branch point having 4 or more polymer chains, more preferably a branch point having 5 or more polymer chains, and further preferably a branch point having 6 or more polymer chains.

In the conjugated diene-based polymer of the present embodiment, for example, in polymerization of the conjugated diene-based polymer, a branched conjugated diene-based polymer, or a conjugated diene-based polymer having a star polymer structure in which a branched chain is further branched can be obtained by adding a branching agent described below. The number of branches of a branch point generated by adding the branching agent, and the number of such branch points can be controlled by adjusting the number of functional groups of the branching agent, the amounts of the polymerization initiator and the branching agent to be added, and the timing of adding the branching agent.

A branch point generated by adding the branching agent preferably contains a nitrogen atom or a silicon atom. In other words, the conjugated diene-based polymer of the present embodiment preferably contains a nitrogen atom or a silicon atom, and a branch is generated in a portion having a nitrogen atom or a silicon atom.

From the viewpoint of effectively and definitely exhibiting the effects of the present embodiment, it is preferable that the conjugated diene-based polymer of the present embodiment contains at least one portion derived from a vinyl-based monomer containing an alkoxysilyl group or a halosilyl group, and is further branched in the portion. In the portion derived from a vinyl-based monomer containing an alkoxysilyl group or a halosilyl group, the conjugated diene-based polymer of the present embodiment contains preferably 3 or more branches, more preferably 4 or more branches, and further preferably 5 or more branches.

From the viewpoint of effectively and definitely exhibiting the effects of the present embodiment, it is preferable that at least one branched chain of the star polymer structure contains at least one portion(s) derived from a vinyl-based monomer containing an alkoxysilyl group or a halosilyl group, and is further branched in the portion. In other words, at least one branch point in a branched chain of the star polymer structure preferably corresponds to a portion derived from a vinyl-based monomer containing an alkoxysilyl group or a halosilyl group. From a similar viewpoint, more preferably a half or more of, and further preferably all of branch points in the branched chain of the above-described star polymer structure correspond to portions each derived from a vinyl-based monomer containing an alkoxysilyl group or a halosilyl group. The conjugated diene-based polymer of the present embodiment has, in each portion derived from a vinyl-based monomer containing an alkoxysilyl group or a halosilyl group, preferably 3 or more branches, more preferably 4 or more branches, and further preferably 5 or more branches.

It can be confirmed, by $^{29}$Si-NMR measurement, that the conjugated diene-based polymer of the present embodiment has a branch point in the portion derived from a vinyl-based monomer containing an alkoxysilyl group or a halosilyl group. When the conjugated diene-based polymer has at least one portion derived from a vinyl-based monomer containing an alkoxysilyl group or a halosilyl group, and a polymer chain is branched in the portion, a peak derived from the portion is detected, in signal detection by $^{29}$Si-NMR, in a range of -45 ppm to - 65 ppm, and more restrictively in a range of -50 ppm to - 60 ppm.

From the viewpoint of effectively and definitely exhibiting the effects of the present embodiment, at least one of the portion(s) each derived from a vinyl-based monomer containing an alkoxysilyl group or a halosilyl group is preferably derived from a compound represented by the following formula (1) or (2). In other words, at least one of branch points in the branched chains of the above-described star polymer structure is a portion derived from the compound represented by the following formula (1) or (2). From a similar viewpoint, more preferably a half or more of, and further preferably all of branch points in the branched chains of the above-described star polymer structure correspond to portions each derived from the compound represented by the following formula (1) or (2).

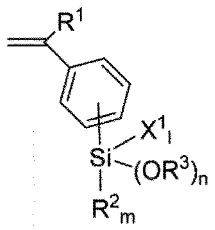

(1)

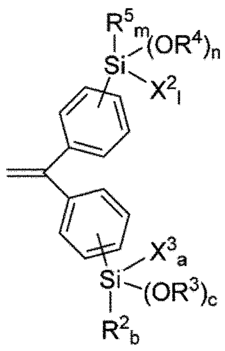

(2)

In the formula (1), $R^1$ represents a hydrogen atom, an alkyl group having 1 to 20 carbon atoms, or an aryl group having 6 to 20 carbon atoms, and may have a branch structure in a part thereof; $R^2$ and $R^3$ each independently represent an alkyl group having 1 to 20 carbon atoms, or an aryl group having 6 to 20 carbon atoms, and may have a branch structure in a part thereof; $X^1$ each independently represents a halogen atom; and m represents an integer of 0 to 2, n represents an integer of 0 to 3, l represents an integer of 0 to 3, and a sum of m, n, and l is 3.

In the formula (2), $R^2$, R3, $R^4$ and $R^5$ each independently represent an alkyl group having 1 to 20 carbon atoms,

or an aryl group having 6 to 20 carbon atoms, and may have a branch structure in a part thereof; $X^2$ and $X^3$ each independently represent a halogen atom; m represents an integer of 0 to 2, n represents an integer of 0 to 3, l represents an integer of 0 to 3, and a sum of m, n, and l is 3; and a represents an integer of 0 to 3, b represents an integer of 0 to 2, c represents an integer of 0 to 3, and a sum of a, b, and c is 3.

Examples of the compound represented by the formula (1) or (2) will be described below.

In the conjugated diene-based polymer of the present embodiment, at least one of the branch points in the branched chains of the star polymer structure preferably corresponds to a portion derived from a compound represented by the formula (1) wherein $R^1$ is a hydrogen atom, and m is 0. Such a conjugated diene-based polymer tends to have a further higher branch number, and is further improved in abrasion resistance and processability.

In the conjugated diene-based polymer of the present embodiment, at least one of the branch points in the branched chains of the star polymer structure preferably corresponds to a portion derived from a compound represented by the formula (1) wherein $R^1$ is a hydrogen atom, m is 0, l is 0, and n is 3. Such a conjugated diene-based polymer tends to be further improved in the modification ratio and the branch number, and is further improved in low fuel consumption performance, abrasion resistance, and processability.

In the conjugated diene-based polymer of the present embodiment, at least one of the branch points in the branched chains of the star polymer structure preferably corresponds to a portion derived from a compound represented by the formula (2) wherein m is 0, and b is 0. Such a conjugated diene-based polymer tends to have a further higher branch number, and is further improved in abrasion resistance and processability.

In the conjugated diene-based polymer of the present embodiment, at least one of the branch points in the branched chains of the star polymer structure preferably corresponds to a portion derived from a compound represented by the formula (2) wherein m is 0, l is 0, n is 3, a is 0, b is 0, and c is 3. Such a conjugated diene-based polymer tends to have a further higher branch number, and is further improved in abrasion resistance and processability.

The conjugated diene-based polymer of the present embodiment is particularly preferably a conjugated diene-based polymer that has a star polymer structure having 3 or more branches, in which at least one branched chain of the star polymer structure has at least one portion derived from a vinyl-based monomer containing an alkoxysilyl group or a halosilyl group, and the polymer is further branched in the portion. Such a conjugated diene-based polymer tends to be further improved in processability and abrasion resistance.

In order to definitely obtain a conjugated diene-based polymer that has a star polymer structure having 3 or more branches, in which at least one branched chain of the star polymer structure has at least one portion derived from a vinyl-based monomer containing an alkoxysilyl group or a halosilyl group, and the polymer is further branched in the portion, for example, the following method may be employed. Specifically, a conjugated diene compound and an aromatic vinyl compound are polymerized with an organic lithium-based compound used as a polymerization initiator, and during the polymerization and/or after the polymerization, the resultant conjugated diene-based polymer is reacted further with a branching agent described below, and thus, a conjugated diene-based polymer having a branch structure is obtained. Thereafter, the conjugated diene-based polymer having a branch structure thus obtained is reacted further with a modifier described below, and thus a modified conjugated diene-based polymer may be obtained. As specific polymerization conditions, conditions described in a production method in the examples below may be employed.

When a coupling modifier described below is used in reacting a conjugated diene-based polymer having a branch structure with a modifier, a modified conjugated diene-based polymer having a star polymer structure can be definitely obtained. Modification with a coupling modifier and introduction of a branching agent both can increase the branch number (Bn) of the resultant conjugated diene-based polymer, and the branch number (Bn) tends to be further increased through the modification with a coupling modifier.

In design of a polymer, the branch number (Bn) can be controlled in accordance with selection of the type of a coupling modifier and a branching agent, and setting of the amounts of these, and the branch number (Bn) can be more easily controlled by taking also a contribution rate to the increase of the branch number (Bn) into consideration.

(Average Molecular Weight)

A weight average molecular weight measured by a GPC measurement method of the conjugated diene-based polymer of the present embodiment is preferably 30 x $10^4$ or more, more preferably 40 x $10^4$ or more, further preferably 45 x $10^4$ or more, and particularly preferably 60 x $10^4$ or more. When the weight average molecular weight measured by the GPC measurement method falls in the above-described range, processability in vulcanization is further excellent, and a vulcanizate obtained therefrom is further excellent in a low hysteresis loss property. Besides, the weight average molecular weight is preferably 300 x $10^4$ or less, more preferably 250 x $10^4$ or less, further preferably 180 x $10^4$ or less, and still further preferably 150 x $10^4$ or less. When the weight average molecular weight falls in the above-described range, dispersibility of a filler in the vulcanizate obtained therefrom is further excellent, and practically sufficient fracture performance tends to be obtained. The weight average molecular weight may fall in a range obtained by arbitrarily combining any of the upper limits and any of the lower limits. The weight average molecular weight measured by the

GPC measurement method of a modified conjugated diene-based polymer and a conjugated diene-based polymer described below is measured specifically by a method described in the examples below.

A number average molecular weight measured by the GPC measurement method of the conjugated diene-based polymer of the present embodiment is preferably 20 x $10^4$ or more, more preferably 25 x $10^4$ or more, and further preferably 30 x $10^4$ or more. The number average molecular weight may be 35 x $10^4$ or more. When the number average molecular weight measured by the GPC measurement method falls in the above-described range, processability in vulcanization is further excellent, and a vulcanizate obtained therefrom is further excellent in a low hysteresis loss property. Besides, the number average molecular weight is preferably 100 x $10^4$ or less, more preferably 90 x $10^4$ or less, further preferably 80 x $10^4$ or less, and still further preferably 70 x $10^4$ or less. When the number average molecular weight falls in the above-described range, dispersibility of a filler in the vulcanizate obtained therefrom is further excellent, and practically sufficient fracture performance tends to be obtained. The number average molecular weight may fall in a range obtained by arbitrarily combining any of the upper limits and any of the lower limits. The number average molecular weight measured by the GPC measurement method of a modified conjugated diene-based polymer and a conjugated diene-based polymer described below is measured specifically by a method described in the examples below.

In the conjugated diene-based polymer of the present embodiment, a ratio (Mw/Mn) of the weight average molecular weight (Mw) measured by the GPC measurement method to the number average molecular weight (Mn) measured by the GPC measurement method is preferably 1.5 or more and 3.0 or less, more preferably 1.6 or more and 2.8 or less, and further preferably 1.7 or more and 2.4 or less from the viewpoint that the effects of the present embodiment are effectively and definitely exhibited.

(Mooney Viscosity)

A Mooney viscosity measured at 100°C of the conjugated diene-based polymer of the present embodiment is preferably 50 or more and 180 or less, and more preferably 70 or more and 160 or less. When the Mooney viscosity falls in the above-described range, processability in vulcanization, and abrasion resistance of a vulcanizate obtained therefrom tend to be further improved. A Mooney viscosity of a modified conjugated diene-based polymer and a conjugated diene-based polymer described below can be measured by a method described in the examples below.

(Preferable Structure of Conjugated Diene-based Polymer)

From the viewpoint that the effects of the present embodiment are effectively and definitely exhibited, the conjugated diene-based polymer of the present embodiment preferably contains a nitrogen atom or a silicon atom. In particular, it is more preferable that a structure derived from a compound represented by the following formula (i) or any one of the following formulas (A) to (D) is contained. The conjugated diene-based polymer is further preferably modified by using, as a coupling modifier, the compound represented by the following formula (i) or any one of the following formulas (A) to (D). Examples of the compound represented by the following formula (i) or any one of the following formulas (A) to (D) will be described later.

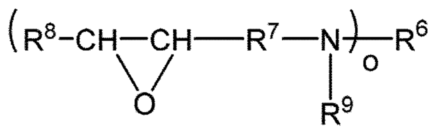

(i)

In the formula (i), $R^7$ represents a bivalent hydrocarbon group, or a bivalent organic group having at least one polar group selected from a polar group having an oxygen atom such as ether, epoxy or ketone, a polar group having a sulfur atom such as thioether or thioketone, and a polar group having a nitrogen atom such as a tertiary amino group or an imino group.

The bivalent hydrocarbon group may be a saturated or unsaturated linear, branched or cyclic hydrocarbon group, and encompasses an alkylene group, an alkenylene group, a phenylene group and the like. The bivalent hydrocarbon group is preferably a bivalent hydrocarbon group having 1 to 20 carbon atoms. The bivalent hydrocarbon group having 1 to 20 carbon atoms is not especially limited, and examples include methylene, ethylene, butylene, cyclohexylene, 1,3-bis(methylene)-cyclohexane, 1,3-bis(ethylene)-cyclohexane, o-phenylene, m-phenylene, p-phenylene, m-xylene, p-xylene, and bis(phenylene)-methane.

In the formula (i), $R^8$ represents a hydrogen atom, a monovalent alkyl group having 1 to 10 carbon atoms, or an aryl group having 6 to 10 carbon atoms.

In the formula (i), $R^6$ represents a hydrogen atom, a monovalent or higher alkyl group having 1 to 10 carbon atoms, or an aryl group having 6 to 10 carbon atoms. The valence of $R^6$ is 1 or more, and is the same as o in the formula (i).

In the formula (i) $R^9$ represents a monovalent hydrocarbon group having 1 to 10 carbon atoms, or a structure of the following formula (ii).

$R^6$ and $R^8$ may be a cyclic structure mutually bonded.

When $R^9$ is a monovalent hydrocarbon group, it may be a cyclic structure mutually bonded to $R^8$. Only when N bonded to $R^9$ and $R^8$ are directly bonded to each other, however, $R^9$ may be a hydrogen atom.

In the formula (i), o is an integer of 1 or more.

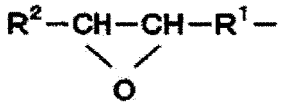

(i i)

In the formula (ii), $R^1$ and $R^2$ are defined the same respectively as $R^7$ and $R^8$ in the formula (i).

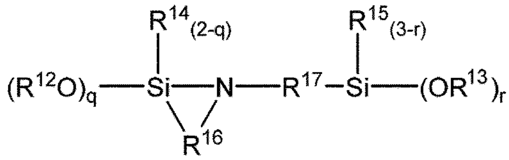

(A)

In the formula (A), $R^{12}$, $R^{13}$, $R^{14}$, and $R^{15}$ each independently represent an alkyl group having 1 to 20 carbon atoms, or an aryl group having 6 to 20 carbon atoms, $R^{16}$ represents an alkylene group having 1 to 10 carbon atoms, $R^{17}$ represents an alkylene group having 1 to 20 carbon atoms, q represents an integer of 1 or 2, r represents an integer of 2 or 3, and a sum of q and r is an integer of 4 or more.

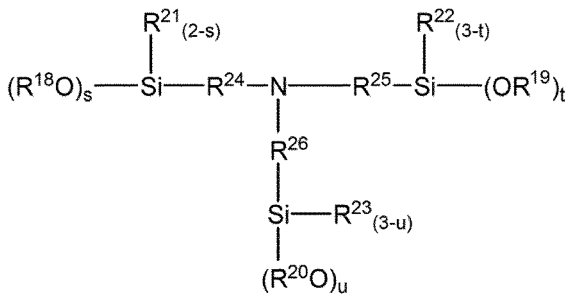

(B)

In the formula (B), $R^{18}$, $R^{19}$, $R^{20}$, $R^{21}$, $R^{22}$, and $R^{23}$ each independently represent an alkyl group having 1 to 20 carbon atoms, or an aryl group having 6 to 20 carbon atoms, $R^{24}$, $R^{25}$ and $R^{26}$ each independently represent an alkylene group having 1 to 20 carbon atoms, s, t, and u each independently represent an integer of 1 to 3, and a sum of s, t, and u is an integer of 4 or more.

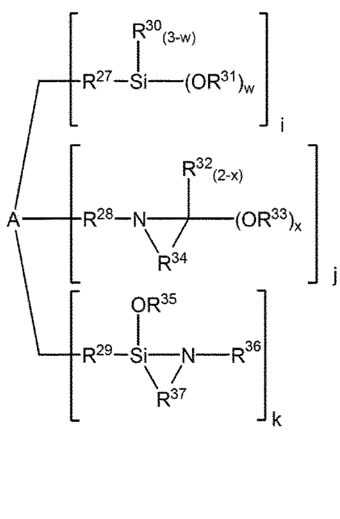

(C)

In the formula (C), A represents a hydrocarbon group having 1 to 20 carbon atoms, or an organic group having at least one atom selected from the group consisting of an oxygen atom, a nitrogen atom, a silicon atom, a sulfur atom, and a phosphorus atom, but not having active hydrogen, $R^{27}$, $R^{28}$ and $R^{29}$ each independently represent a single bond, or an alkylene group having 1 to 20 carbon atoms, $R^{30}$, $R^{31}$, $R^{32}$, $R^{33}$, and $R^{35}$ each independently represent an alkyl group having 1 to 20 carbon atoms, $R^{34}$ and $R^{37}$ each independently represent an alkylene group having 1 to 20 carbon atoms, $R^{36}$ each independently represents an alkyl group having 1 to 20 carbon atoms, or a trialkylsilyl group, w each independently represents an integer of 1 to 3, x each independently represents 1 or 2, i represents an integer of 0 to 6, j represents an integer of 0 to 6, k represents an integer of 0 to 6, and a sum of i, j, and k is an integer of 4 to 10.

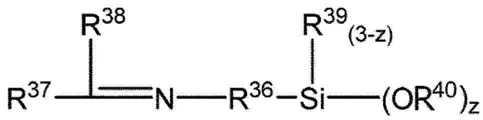
(D)

In the formula (D), $R^{36}$ represents an alkylene group having 1 to 20 carbon atoms, $R^{37}$, $R^{39}$, and $R^{40}$ each independently represent an alkyl group having 1 to 20 carbon atoms, or an aryl group having 6 to 20 carbon atoms, $R^{38}$ represents a hydrogen atom, or a hydrocarbon group having 1 to 20 carbon atoms, and z represents an integer of 1 to 3.
In more detail, the conjugated diene-based polymer of the present embodiment preferably contains a structure derived from a coupling modifier described below.

(Method for Producing Conjugated Diene-based Polymer)

The conjugated diene-based polymer described above can be produced by any method as long as it is a method by which a polymer having the above-described structure can be obtained, and when a method for producing a conjugated diene-based polymer of the present embodiment described in detail below is employed, the conjugated diene-based polymer can be definitely and easily obtained.
The method for producing a conjugated diene-based polymer of the present embodiment includes a polymerizing-branching step of obtaining a conjugated diene-based polymer having a branch structure by adding a branching agent during polymerization of at least a conjugated diene compound and an aromatic vinyl compound with an organic lithium compound used as a polymerization initiator. According to such a method, a conjugated diene-based polymer having the amount of bound aromatic vinyl, the content of vinyl bond in bound conjugated diene, and a branch number (Bn) respectively falling in the above-described ranges can be definitely and easily obtained.
The method for producing a conjugated diene-based polymer of the present embodiment preferably includes a coupling step of obtaining a modified conjugated diene-based polymer by reacting the conjugated diene-based polymer having a branch structure obtained by the polymerizing-branching step with a coupling modifier. According to such a method, a conjugated diene-based polymer having a weight average molecular weight, a glass transition temperature, and a branch number (Bn) respectively falling in the above-described ranges can be definitely and easily obtained.

(Polymerizing-Branching Step)

The polymerizing-branching step is a step of obtaining a conjugated diene-based polymer having a branch structure by adding a branching agent during polymerization of at least a conjugated diene compound and an aromatic vinyl compound with an organic lithium compound described below used as a polymerization initiator. Accordingly, in the polymerizing-branching step, a polymerization reaction of at least a conjugated diene compound and an aromatic vinyl compound is a principal reaction before adding a branching agent, and after adding the branching agent, a branching reaction starts.
The polymerization reaction of at least a conjugated diene compound and an aromatic vinyl compound is performed preferably through a growth reaction by a living anionic polymerization reaction, and thus, a conjugated diene-based polymer having an active end can be obtained. As a result, when a branching agent is added, the conjugated diene-based polymer and the branching agent efficiently react with each other. Besides, also when the production method of the present embodiment includes a coupling step described below, a reaction with high efficiency tends to be caused.
Examples of a polymerization reaction mode include, but are not limited to, batch and continuous polymerization reaction modes.
In the continuous mode, one reactor or two or more connected reactors can be used. As a reactor for the continuous mode, for example, a tank or tubular reactor equipped with a stirrer is used. In the continuous mode, a monomer, an inert solvent described below, and a polymerization initiator described below are continuously fed to the reactor, a polymer solution containing a polymer is obtained in the reactor, and the polymer solution is continuously

discharged.

As a reactor for the batch mode, for example, a tank reactor equipped with a stirrer is used. Preferably, in the batch mode, a monomer, an inert solvent described below, and a polymerization initiator described below are fed, the monomer is continuously or intermittently additionally fed if necessary, during the polymerization, a polymer solution containing a polymer is obtained in the reactor, and the polymer solution is discharged after completing the polymerization.

In the production method of the present embodiment, from the viewpoint that a conjugated diene-based polymer having an active end can be obtained at a high ratio, the polymerization reaction is caused to proceed preferably by the continuous polymerization reaction mode in which a polymer is continuously discharged to be supplied to a next reaction in a short period of time.

As monomers, that is, a conjugated diene compound and an aromatic vinyl compound, used in the polymerizing-branching step, at least one of the above-described conjugated diene compounds and at least one of the above-described aromatic vinyl compounds may be used. From the viewpoint that a nitrogen atom can be introduced into a conjugated diene-based polymer, a derivative obtained by substituting the conjugated diene compound or the aromatic vinyl compound so as to have at least one nitrogen atom in a molecule may be used.

The polymerization initiator is not especially limited, and for example, an organic lithium compound such as an organic monolithium compound can be used.

Examples of the organic monolithium compound include, in terms of binding mode between an organic group and lithium therein, a compound having a carbon-lithium bond, a compound having a nitrogen-lithium bond, and a compound having a tin-lithium bond.

Among these, from the viewpoint that a nitrogen atom can be introduced into a conjugated diene-based polymer, the organic monolithium compound is preferably an organic lithium compound having at least one nitrogen atom in a molecule, and more preferably an alkyllithium compound having a substituted amino group, or dialkylamino lithium.

It is noted that the substituted amino group refers to an amino group having no active hydrogen, or an amino group having active hydrogen protected.

Such an alkyllithium compound containing an amino group having no active hydrogen is not especially limited, and examples include piperidinolithium, 3-dimethylaminopropyllithium, 3-diethylaminopropyllithium, 4-(methylpropylamino)butyllithium and 4-hexamethyleneiminobutyllithium.

The alkyllithium compound containing an amino group having active hydrogen protected is not especially limited, and examples include 3-bistrimethylsilylaminopropyllithium and 4-trimethylsilylmethylaminobutyllithium.

The dialkylamino lithium is not especially limited, and examples include lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo[3.2.1] octane, and 1-lithio-1,2,3,6-tetrahydropyridine.

Such an organic monolithium compound having a substituted amino group can be reacted with a small amount of a polymerizable monomer, such as 1,3-butadiene, isoprene or styrene, to be used also as an organic monolithium compound of a soluble oligomer.

When the polymerization initiator has a nitrogen atom constituting an amino group, a chain transfer reaction easily occurs during progress of anion polymerization, and hence a reacting amount of a coupling agent or a modifier with the active end after completing the polymerization tends to be reduced. As a result, when the polymerization initiator having a nitrogen atom constituting an amino group is used, the resultant weight average molecular weight tends to be low.

Therefore, when a modification ratio is desired to be set high in a polymer having a comparatively high molecular weight of a weight average molecular weight of $40 \times 10^4$ or more, $45 \times 10^4$ or more, or $60 \times 10^4$ or more, it is preferable to react a nitrogen atom not on a side of a polymerization start end but on a side of a polymerization terminal end. In other words, there is a tendency that a polymer having a comparatively high molecular weight, and having nitrogen atoms at both ends is difficult to be produced. Although depending on the weight average molecular weight and the structures of a coupling agent and a modifier, when a nitrogen atom is contained only on the side of the terminal end, a nitrogen content in the polymer is generally 3 ppm by mass to 500 ppm by mass.

From the viewpoints of industrial availability and controllability of a polymerization reaction, an alkyllithium compound may be used as the organic monolithium compound. When such an organic monolithium compound is used, a conjugated diene-based polymer having an alkyl group at a polymerization start end can be obtained.

The alkyllithium compound is not especially limited, and examples include n-butyllithium, sec-butyllithium, tert-butyllithium, n-hexyllithium, benzyllithium, phenyllithium, and stilbene lithium.

As the alkyllithium compound, from the viewpoints of industrial availability and controllability of a polymerization reaction, n-butyllithium and sec-butyllithium are preferred.

One of these organic monolithium compounds may be singly used, or two or more of these may be used together. Alternatively, another organic metal compound may be used together.

Another organic metal compound is not especially limited, and examples include alkaline earth metal compounds, alkaline metal compounds excluding lithium, and other organic metal compounds.

The alkaline earth metal compounds are not especially limited, and examples include organic magnesium compounds, organic calcium compounds and organic strontium compounds. Other examples include compounds of alkoxides, sulfonates, carbonates and amides of alkaline earth metals.

Examples of the organic magnesium compounds include dibutyl magnesium and ethyl butyl magnesium.

Examples of the other organic metal compounds include organic aluminum compounds.

The amount of the polymerization initiator to be added is preferably determined based on the molecular weight of a conjugated diene-based polymer or a modified conjugated diene-based polymer to be obtained. The number average molecular weight and/or the weight average molecular weight can be controlled in accordance with a ratio of the amount of monomers to be added to the amount of the polymerization initiator to be added. Specifically, when the ratio of the amount of the polymerization initiator to be added is reduced, the molecular weight tends to be increased, and when the ratio of the amount of the polymerization initiator to be added is increased, the molecular weight tends to be reduced.

From the viewpoint that the conjugated diene-based polymer of the present embodiment can be definitely and easily obtained, the polymerizing-branching step is preferably performed in an inert solvent. Such an inert solvent is not especially limited, and examples include hydrocarbon solvents such as a saturated hydrocarbon and an aromatic hydrocarbon. The hydrocarbon solvent is not especially limited, and specific examples include aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons containing mixtures of any of these.

From the viewpoint that a conjugated diene-based polymer in which a conjugated diene compound and an aromatic vinyl compound are further randomly polymerized can be obtained, for example, the following method as described in Japanese Patent Laid-Open No. S59-140211 may be employed for the polymerization reaction in the polymerizing-branching step. Specifically, a method in which the polymerization reaction is started using the whole amount of the aromatic vinyl compound and a part of the conjugated diene compound, with the rest of the conjugated diene compound intermittently added during the polymerization reaction may be employed.

A polymerization temperature employed in the polymerization reaction in the polymerizing-branching step is not especially limited, and is preferably a temperature at which living anion polymerization proceeds. From the viewpoint of improving productivity, the temperature is more preferably 0°C or more, and further preferably 0°C or more and 120°C or less. When the polymerization temperature in the polymerization reaction falls in the above-described range, there is a tendency that reactivity with a coupling modifier can be sufficiently improved in the coupling step described below. From a similar viewpoint, the polymerization temperature in the polymerization reaction is still further preferably 50°C or more and 100°C or less.

In the polymerizing-branching step, a polar compound may be added. When the polar compound is added, there is a tendency that a conjugated diene-based polymer in which an aromatic vinyl compound and a conjugated diene compound are further randomly copolymerized can be obtained. Since the polar compound thus has a randomizing effect effective in copolymerization of the conjugated diene compound and the aromatic vinyl compound, it can be used as an agent for adjusting a distribution of the aromatic vinyl compound or adjusting the amount of styrene blocks. Besides, the polar compound can accelerate the polymerization reaction, and can also be used as a vinylation agent for controlling the microstructure of the conjugated diene-based polymer.

Since the polar compound is thus used as a vinylation agent, a randomizing agent, and a polymerization accelerator, for example, when the polar compound is reduced for adjusting a vinylation rate or a randomization rate, a polymerization acceleration effect tends to be also reduced. Accordingly, in employing a method in which the branch number of a polymer is adjusted by reacting a coupling modifier with a polymerization terminal end, if the amount of the polar compound to be added is reduced, a polymerization time is elongated, and a ratio of deactivated polymerization terminal ends is increased. As a result, there is a tendency that the modification ratio is difficult to be increased by such a method. In other words, when the branch number of a modified conjugated diene-based polymer is to be adjusted by adjusting the amount of the polar compound to be added and by a coupling modifier, there is a tendency that the vinylation rate and the randomization rate are difficult to be controlled. In this regard, in the production method of the present embodiment, the branch number of a polymer can be increased by a branching agent described below, and hence, the branch number can be controlled independently of the vinylation rate and the randomization rate, which is advantageous in structural design of a polymer.

The polar compound is not especially limited, and for example, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine can be used. One of these polar compounds may be singly used, or two

or more of these may be used together.

The amount of the polar compound to be added is not especially limited, and can be adjusted in accordance with the amount of polymerization active ends, namely, the amount of the polymerization initiator to be added. The amount of the polar compound to be added is preferably 0.010 mol or more and 1.0 mol or less, and more preferably 0.10 mol or more and 0.70 mol or less per mole of the polymerization initiator. Within the above-described range, the amount of the polar compound to be added may be 0.60 mol or less, or 0.50 mol or less per mole of the polymerization initiator. Alternatively, the amount may be 0.15 mol or more, or 0.20 mol or more per mole of the polymerization initiator. When the amount of the polar compound to be added is equal to or smaller than the upper limit, a conjugated diene compound having a low Tg tends to be obtained. When the amount of the polar compound to be added is equal to or larger than the lower limit, there is a tendency that deactivation of a polymerization active end is suppressed to improve a coupling rate obtained in the coupling step described below. The amount of the polar compound to be added may fall in a range obtained by arbitrarily combining any of the upper limits and any of the lower limits.

The production method of the present embodiment may include, before the polymerizing-branching step, a step of removing impurities. In particular, when the monomers, the polymerization initiator and/or the inert solvent contain allenes and acetylenes as impurities, the production method of the present embodiment preferably includes, before the polymerizing-branching step, the step of removing impurities. When the step of removing impurities is included, a conjugated diene-based polymer having an active end at a high concentration tends to be obtained, and a modified conjugated diene-based polymer having a high modification ratio tends to be obtained in the coupling step described below. The step of removing impurities is not especially limited, and an example includes a step of performing treatment with an organic metal compound. The organic metal compound is not especially limited, and examples include organic lithium compounds, the organic lithium compounds are not especially limited, and an example includes n-butyllithium.

In the polymerizing-branching step, a branching reaction is started in the conjugated diene-based polymer by adding a branching agent described below. After adding the branching agent, a polymerization reaction for growing the conjugated diene-based polymer and a branching reaction for branching the conjugated diene-based polymer are caused in competition with each other in the reaction system. Accordingly, in accordance with the type and the amount of the branching agent to be added, and timing of adding the branching agent, the weight average molecular weight, the number average molecular weight, the ratio (Mw/Mn) therebetween and the absolute molecular weight of the conjugated diene-based polymer obtained in the polymerizing-branching step, and the branch number, the number of branches, and the number of branch points in each branch point of the conjugated diene-based polymer can be controlled.

Besides, the total amount of active ends of the conjugated diene-based polymer in the reaction system can be reduced as compared with the amount of the polymerization initiator to be added by adding the branching agent during the polymerization of the conjugated diene-based polymer, and even when the amount of the polar compound to be added is small, a reaction at an initial stage of the polymerization can be accelerated to retain the activity of the polymerization active ends. As a result, in the conjugated diene-based polymer of the present invention having the amount of bound aromatic vinyl and the content of vinyl bond respectively falling in the above-described prescribed ranges, the coupling rate of polymerization terminal ends and/or the modification ratio can be easily improved. In addition, since the modification ratio can be easily improved, there is a tendency that the branch number (Bn) of the conjugated diene-based polymer can be easily increased by using a coupling modifier having a multi-branched structure as the modifier. It is, however, not always necessary to react the conjugated diene-based polymer of the present embodiment with the coupling agent or the modifier.

As described above, in the method for producing a conjugated diene-based polymer, the amount of the polar compound to be added can be adjusted for purposes of controlling the microstructure such as the amount of bound aromatic vinyl and the content of vinyl bond. If the branching agent is not added, the amount of the polar compound to be added usually employed for obtaining the amount of bound aromatic vinyl and the content of vinyl bond in the above-described prescribed ranges is insufficient from the viewpoint of retaining the active ends of the conjugated diene-based polymer in the reaction system, and hence the activity of the polymerization active ends cannot be easily sufficiently retained. Besides, this amount of the polar compound to be added cannot provide sufficiently high randomization performance for the aromatic vinyl compound and the conjugated diene compound, and in the conjugated diene-based polymer of the present embodiment having the amount of bound aromatic vinyl and the content of vinyl bond falling in the above-described prescribed ranges, a polymerization end tends to be the aromatic vinyl compound. In such a state, it tends to be difficult to obtain a conjugated diene-based polymer having a high coupling rate or modification ratio, and accordingly, the branch number (Bn) tends to be difficult to be sufficiently increased.

The timing of adding the branching agent in the branching step is not especially limited, and can be appropriately selected in accordance with use and the like of the conjugated diene-based polymer to be produced. From the viewpoints of improving the absolute molecular weight of the conjugated diene-based polymer to be obtained, and of improving the modification ratio in the coupling step, the timing of adding the branching agent is timing, after adding the polymerization initiator, when a raw material conversion rate is preferably 20% or more, more preferably 40% or more, further preferably 50% or more, still further preferably 65% or more, and particularly preferably 75% or more. In other words, the timing of

adding the branching agent is preferably timing when the polymerization reaction has been sufficiently stabilized. When the timing of adding the branching agent falls in the above-described range, a conjugated diene-based polymer having a further higher modification ratio in the coupling step can be obtained even if the amount of the polar compound to be added is small or none.

The branching agent is not especially limited, and for example, a compound represented by the following formula (1) or formula (2) can be used.

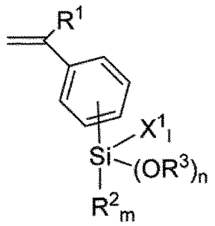

(1)

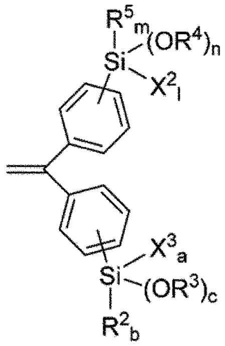

(2)

In the formula (1), $R^1$ represents a hydrogen atom, an alkyl group having 1 to 20 carbon atoms, or an aryl group having 6 to 20 carbon atoms, and may have a branch structure in a part thereof; $R^2$ and $R^3$ each independently represent an alkyl group having 1 to 20 carbon atoms, or an aryl group having 6 to 20 carbon atoms, and may have a branch structure in a part thereof; $X^1$ each independently represents a halogen atom; and m represents an integer of 0 to 2, n represents an integer of 0 to 3, 1 represents an integer of 0 to 3, and a sum of m, n, and l is 3.

In the formula (2), $R^2$, $R^3$, $R^4$ and $R^5$ each independently represent an alkyl group having 1 to 20 carbon atoms, or an aryl group having 6 to 20 carbon atoms, and may have a branch structure in a part thereof; $X^2$ and $X^3$ each independently represent a halogen atom; m represents an integer of 0 to 2, n represents an integer of 0 to 3, l represents an integer of 0 to 3, and a sum of m, n, and l is 3; and a represents an integer of 0 to 3, b represents an integer of 0 to 2, c represents an integer of 0 to 3, and a sum of a, b, and c is 3.

In particular, from the viewpoint of suppressing inhibition of the polymerization reaction, and from the viewpoint of improving the branch number, the branching agent is preferably a compound represented by the formula (1) wherein $R^1$ is a hydrogen atom, and m is 0.

Alternatively, from the viewpoint of improving the branch number, the branching agent is preferably a compound represented by the formula (2) wherein m is 0, and b is 0.

Alternatively, from the viewpoints of continuity of the polymerization and improvement of the modification ratio and the branch number, the branching agent is more preferably a compound represented by the formula (1) wherein $R^1$ is a hydrogen atom, m is 0, l is 0, and n is 3.

Alternatively, from the viewpoint of improving the modification ratio and the branch number, the branching agent is preferably a compound represented by the formula (2) wherein m is 0, l is 0, n is 3, a is 0, b is 0, and c is 3.

The compound represented by the formula (1) is not especially limited, and examples include trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinylphenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, dimethylisopropoxy(2-vinylphenyl)silane, trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, dimethylisopropoxy(2-isopropenylphenyl)silane, trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred, and trimethoxy(4-vinylphenyl)silane, triethoxy(4-vinylphenyl)silane, tripropoxy(4-vinylphenyl)silane, tributoxy(4-vinylphenyl)silane, and triisopropoxy(4-vinylphenyl)silane are more preferred.

Examples of the compound represented by the formula (2) include, but are not limited to, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl)ethylene, 1,1-bis(3-triisopropoxysilylphenyl)ethylene, 1,1-bis(2-trimethoxysilylphenyl)ethylene, 1,1-bis(2-triethoxysilylphenyl)ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, and 1,1-bis(4-(dipropylethoxysilyl)phenyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

The amount of the branching agent to be added is not especially limited, and can be appropriately selected in accordance with use and the like of the conjugated diene-based polymer to be produced, and is preferably 0.020 mole or more and 0.50 mole or less, more preferably 0.030 mole or more and 0.40 mole or less, and further preferably 0.040 mole or more and 0.25 mole or less per mole of the polymerization initiator. The amount of the branching agent to be added may be, within the above-described range, 0.050 mole or more, or 0.060 mole or more per mole of the polymerization initiator. Alternatively, the amount may be 0.20 mole or less, or 0.18 mole or less per mole of the polymerization initiator. The amount of the branching agent to be added may fall in a range obtained by arbitrarily combining any of the upper limits and any of the lower limits.

In the polymerizing-branching step, the reaction temperature may be changed, or may not be changed after adding the branching agent.

In the polymerizing-branching step, after adding the branching agent, a monomer of the conjugated diene-based polymer may be further additionally added, the branching agent may be additionally added thereafter, and the additional addition of the branching agent and the monomer may be further repeated.

The monomer to be added is not especially limited, and from the viewpoint of improving the modification ratio in the coupling step, the same monomer as that added as the monomer initially in the polymerizing-branching step is preferably added. The amount of the monomer to be added may be 1.0% or more, 5.0% or more, 10% or more, 15% or more, or 20% or more of the total amount used as the monomer of the conjugated diene-based polymer. The amount of the monomer to be added may be 50% or less, 40% or less, or 35% or less.

When the amount of the monomer to be added falls in the above-described range, a molecular weight between a branch point generated by the addition of the branching agent and a branch point generated by the addition of the coupling modifier is increased, and hence, a molecular structure having a high linearity tends to be easily formed. When the conjugated diene-based polymer to be obtained has such a structure, entanglement among molecular chains of the conjugated diene-based polymer obtained in the form of a vulcanizate is increased, and hence, a vulcanizate excellent in abrasion resistance, steering stability and fracture strength tends to be easily obtained.

(Coupling Step)

The production method of the present embodiment preferably includes a coupling step of obtaining a modified conjugated diene-based polymer by reacting the conjugated diene-based polymer having a branch structure obtained by the polymerizing-branching step with a coupling modifier. When such a coupling step is included, the conjugated diene-based polymer having a branch structure obtained by the polymerizing-branching step can be modified with a specific functional group having affinity or binding reactivity with a filler. Besides, since a plurality of conjugated diene-based polymers can be coupled, a conjugated diene-based polymer having a high branch number (Bn) can be definitely and easily obtained. Accordingly, through the production method including such a coupling step, the conjugated diene-based polymer of the present embodiment described above can be further definitely and easily obtained.

Such a coupling modifier is not especially limited as long as it is a reactive compound having a specific functional group having affinity or binding reactivity with a filler, and having 2 or more functional groups capable of reacting with an active end of the conjugated diene-based polymer. An example of the coupling modifier includes a coupling modifier containing a group having a nitrogen atom and/or a silicon atom. From the viewpoint of effectively and definitely exhibiting the effects of the present embodiment, the coupling modifier has preferably 3 or more, and more preferably 4 or more functional groups capable of reacting with an active end of the conjugated diene-based polymer.

The coupling modifier having a silicon atom-containing group is not especially limited, and examples include a halogenated silane compound, an epoxidized silane compound, a vinylated silane compound, an alkoxysilane compound, and an alkoxysilane compound containing a nitrogen-containing group.

The halogenated silane compound is not especially limited, and examples include methyltrichlorosilane, tetrachlorosilane, tris(trimethylsiloxy)chlorosilane, tris(dimethylamino)chlorosilane, hexachlorodisilane, bis(trichlorosilyl)methane, 1,2-bis(trichlorosilyl)ethane, 1,2-bis(methyldichlorosilyl)ethane, 1,4-bis(trichlorosilyl)butane, and 1,4-bis(methyldichlorosilyl)butane.

The epoxidized silane compound is not especially limited, and examples include 3-glycidoxypropyltrimethoxysilane, 3-glycidoxypropyltriethoxysilane, 3-glycidoxypropylmethyldiethoxysilane, and epoxy-modified silicone.

Examples of the alkoxysilane compound include, but are not especially limited to, tetramethoxysilane, tetraethoxysilane, triphenoxymethylsilane, 1,2-bis(triethoxysilyl)ethane, and methoxy-substituted polyorganosiloxane.

The coupling modifier having a nitrogen atom-containing group is not especially limited, and examples include an isocyanate compound, an isothiocyanate compound, an isocyanuric acid derivative, a nitrogen atom-containing carbonyl compound, a nitrogen atom-containing vinyl compound, a nitrogen atom-containing epoxy compound, and a nitrogen atom-containing alkoxysilane compound.

Preferable examples of the coupling modifier having a nitrogen atom-containing group include an amine compound not having active hydrogen, a protected amine compound in which active hydrogen is substituted with a protecting group, an imine compound represented by a general formula, -N=C, and an alkoxysilane compound bonded to any of these nitrogen atom-containing compounds. An example of the amine compound not having active hydrogen includes a tertiary amine compound.

Examples of the isocyanate compound include, but are not especially limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isocyanuric acid derivative include, but are not especially limited to, 1,3,5-tris(3-trimethoxysilylpropyl)isocyanurate, 1,3,5-tris(3-triethoxysilylpropyl)isocyanurate, 1,3,5-tri(oxirane-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

The nitrogen atom-containing carbonyl compound is not especially limited, and examples include 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino)benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

The nitrogen atom-containing vinyl compound is not especially limited, and examples include N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

The nitrogen atom-containing epoxy compound is not especially limited, and an example includes a hydrocarbon compound containing an epoxy group bonded to an amino group. The hydrocarbon compound may further contain an epoxy group bonded to an ether group. Such a nitrogen atom-containing epoxy compound is not especially limited, and an example includes a compound represented by the following formula (i):

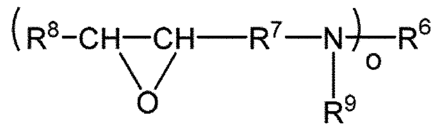

(i)

In the formula (i), $R^7$ represents a bivalent hydrocarbon group, or a bivalent organic group having at least one polar group selected from a polar group having an oxygen atom such as ether, epoxy or ketone, a polar group having a sulfur atom such as thioether or thioketone, and a polar group having a nitrogen atom such as a tertiary amino group or an imino group.

The bivalent hydrocarbon group is a saturated or unsaturated linear, branched or cyclic hydrocarbon group, and encompasses an alkylene group, an alkenylene group, a phenylene group, and the like. The bivalent hydrocarbon group is preferably a bivalent hydrocarbon group having 1 to 20 carbon atoms. The bivalent hydrocarbon group having 1 to 20 carbon atoms is not especially limited, and examples include methylene, ethylene, butylene, cyclohexylene, 1,3-bis(methylene)-cyclohexane, 1,3-bis(ethylene)-cyclohexane, o-phenylene, m-phenylene, p-phenylene, m-xylene, p-xylene, and bis(phenylene)-methane.

In the formula (i), $R^8$ represents a hydrogen atom, a monovalent alkyl group having 1 to 10 carbon atoms, or an aryl group having 6 to 10 carbon atoms.

In the formula (i), $R^6$ represents a hydrogen atom, a mono- or higher valent alkyl group having 1 to 10 carbon atoms, or an aryl group having 6 to 10 carbon atoms. The valence of $R^6$ is 1 or more, and the same as o in the formula (i).

In the formula, (i) $R^9$ represents a monovalent hydrocarbon group having 1 to 10 carbon atoms, or a structure of the following formula (ii).

$R^6$ and $R^8$ may be a cyclic structure mutually bonded.

When $R^9$ is a monovalent hydrocarbon group, it may be a cyclic structure mutually bonded to $R^8$. Only when N bonded to $R^9$ and $R^8$ are directly bonded to each other, however, $R^9$ may be a hydrogen atom.

In the formula (i), o is an integer of 1 or more.

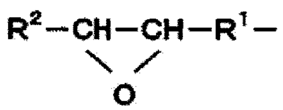

(ii)

In the formula (ii), $R^1$ and $R^2$ are defined the same respectively as $R^7$ and $R^8$ in the formula (i).

The nitrogen atom-containing epoxy compound is preferably a nitrogen atom-containing epoxy compound having, in a molecule, 1 or more diglycidylamino groups and 1 or more glycidoxy groups.

The nitrogen atom-containing epoxy compound is not especially limited, and examples include N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl)aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethylcyclohexane. Among these, preferable examples include N,N-diglycidyl-4-glycidoxyaniline, and 1,3-bis(N,N-diglycidylaminomethyl)cyclohexane.

Examples of the nitrogen atom-containing alkoxysilane compound include, but are not especially limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl)amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino)methyl-1,6-dioxa-2-silacyclooctane.

A particularly preferable nitrogen atom-containing alkoxysilane compound is not especially limited, and examples include tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also designated as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane)propyl] ether, (3-trimethoxysilylpropyl) phosphate, bis(3-trimethoxysilylpropyl)-[3-(2,2-dimethoxy-1-aza-2-silacyclopentane)propyl] phosphate, bis[3-(2,2-dimethoxy-1-aza-2-silacyclopentane)propyl]-(3-trimethoxysilylpropyl) phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propane-1-amine, N-benzylidene-3-(trimethoxysilyl)propane-1-amine, 1,1-(1,4-phenylene)bis(N-(3-(triethoxysilyl)propyl)methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Among the coupling modifiers having a nitrogen atom-containing group, an example of the protected amine compound in which active hydrogen is substituted with a protecting group includes a compound having, in a molecule, an unsaturated bond and a protected amine. Such a compound is not especially limited, and examples include 4,4'-vinylidenebis[N,N-bis(trimethylsilyl)aniline], 4,4'-vinylidenebis[N,N-bis(triethylsilyl)aniline], 4,4'-vinylidenebis[N,N-bis(t-butyldimethylsilyl)aniline], 4,4'-vinylidenebis[N-methyl-N-(trimethylsilyl)aniline], 4,4'-vinylidenebis[N-ethyl-N-(trimethylsilyl)aniline], 4,4'-vinylidenebis[N-methyl-N-(triethylsilyl)aniline], 4,4'-vinylidenebis[N-ethyl-N-(triethylsilyl)aniline], 4,4'-vinylidenebis[N-methyl-N-(t-butyldimethylsilyl)aniline], 4,4'-vinylidenebis[N-ethyl-N-(t-butyldimethylsilyl)aniline], 1-(4-N,N-bis(trimethylsilyl)aminophenyl)-1-[4-N-methyl-N-(trimethylsilyl)aminophenyl]ethylene, and 1-[4-N,N-bis(trimethylsilyl)aminophenyl]-1-[4-N,N-dimethylaminophenyl]ethylene.

Among the coupling modifiers having a nitrogen atom-containing group, an example of the protected amine compound in which active hydrogen is substituted with a protecting group includes a compound containing, in a molecule, an alkoxysilane and a protected amine. Such a compound is not especially limited, and examples include N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-methyl(dimethoxysilyl)propane-1-amine, N-benzylidene-3-methyl(diethoxysilyl)propane-1-amine, N-4-methylbenzylidene-3-(triethoxysilyl)propane-1-amine, N-4-methylbenzylidene-3-(trimethoxysilyl)propane-1-amine, N-4-methylbenzylidene-3-methyl(dimethoxysilyl)propane-1-amine, N-4-methylbenzylidene-3-methyl(diethoxysilyl)propane-1-amine, N-naphtylidene-3-(triethoxysilyl)propane-1-amine, N-naphtylidene-3-(trimethoxysilyl)propane-1-amine, N-naphtylidene-3-methyl(dimethoxysilyl)propane-1-amine, 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-ethoxy-2-methyl-1-(benzylideneaminoethyl)-1-aza-2-silacyclopentane, and 2-methoxy-2-methyl-1-(methylisobutylideneaminoethyl)-1-aza-2-silacyclopentane.

In the coupling step, a coupling modifier represented by the following formula (i) or any one of the following formulas (A) to (D) is preferably used.

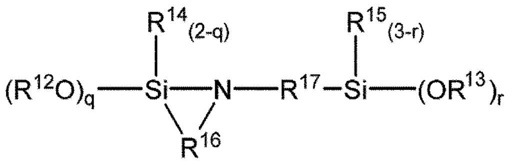

(A)

In the formula (A), $R^{12}$, $R^{13}$, $R^{14}$, and $R^{15}$ each independently represent an alkyl group having 1 to 20 carbon atoms, or an aryl group having 6 to 20 carbon atoms, $R^{16}$ represents an alkylene group having 1 to 10 carbon atoms, $R^{17}$ represents an alkylene group having 1 to 20 carbon atoms, q represents an integer of 1 or 2, r represents an integer of 2 or 3, and a sum of q and r is an integer of 4 or more.

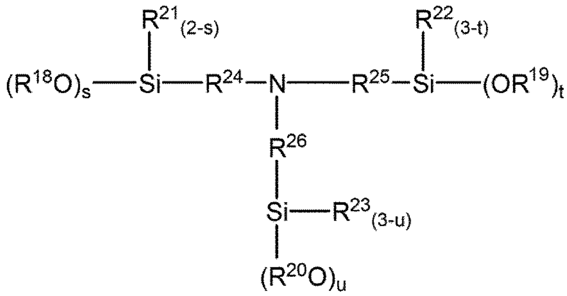

(B)

In the formula (B), $R^{18}$, $R^{19}$, $R^{20}$, $R^{21}$, $R^{22}$, and $R^{23}$ each independently represent an alkyl group having 1 to 20 carbon atoms, or an aryl group having 6 to 20 carbon atoms, $R^{24}$, $R^{25}$ and $R^{26}$ each independently represent an alkylene group having 1 to 20 carbon atoms, s, t, and u each independently represent an integer of 1 to 3, and a sum of s, t, and u is an integer of 4 or more.

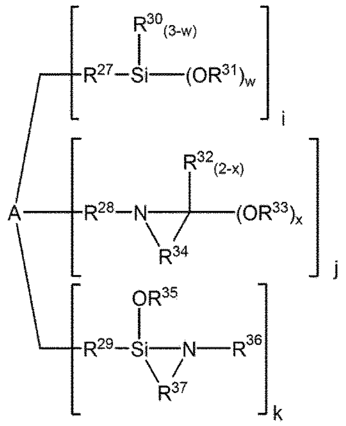

(C)

In the formula (C), A represents a hydrocarbon group having 1 to 20 carbon atoms, or an organic group having at least one atom selected from the group consisting of an oxygen atom, a nitrogen atom, a silicon atom, a sulfur atom, and a phosphorus atom, but not having active hydrogen, $R^{27}$, $R^{28}$ and $R^{29}$ each independently represent a single bond, or an alkylene group having 1 to 20 carbon atoms, $R^{30}$, $R^{31}$, $R^{32}$, $R^{33}$, and $R^{35}$ each independently represent an alkyl group having 1 to 20 carbon atoms, $R^{34}$ and $R^{37}$ each independently represent an alkylene group having 1 to 20 carbon atoms, $R^{36}$ each independently represents an alkyl group having 1 to 20 carbon atoms, or a trialkylsilyl group, w each independently represents an integer of 1 to 3, x each independently represents 1 or 2, i represents an integer of 0 to 6, j represents an integer of 0 to 6, k represents an integer of 0 to 6, and a sum of i, j, and k is an integer of 4 to 10.

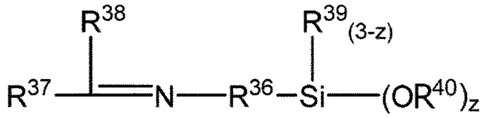

(D)

In the formula (D), $R^{36}$ represents an alkylene group having 1 to 20 carbon atoms, $R^{37}$, $R^{39}$, and $R^{40}$ each independently represent an alkyl group having 1 to 20 carbon atoms, or an aryl group having 6 to 20 carbon atoms, $R^{38}$ represents a hydrogen atom, or a hydrocarbon group having 1 to 20 carbon atoms, and z represents an integer of 1 to 3.

The coupling modifier represented by the formula (A) is not especially limited, and examples include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, and 2-ethoxy,2-ethyl-1-(3-diethoxyethylsilylpropyl)-1-aza-2-silacyclopentane.

Among these, from the viewpoint of increasing reactivity and interaction between the conjugated diene-based polymer and the inorganic filler such as silica, and from the viewpoint of increasing processability, one represented by the formula (A) wherein q is 2 and r is 3 is preferred. Specifically, 2,2-dimethoxy-1-(3-trimethoxysilylpropyl)-1-aza-2-silacyclopentane and 2,2-diethoxy-1-(3-triethoxysilylpropyl)-1-aza-2-silacyclopentane are preferred.

A reaction temperature and a reaction time in the coupling step using the coupling modifier represented by the formula (A) are not especially limited, and the reaction is performed at preferably 0°C or more and 120°C or less, and for preferably 30 seconds or more.

The amount of the coupling modifier represented by the formula (A) to be added corresponds to a total mole number of an alkoxy group bonded to a silyl group of the compound represented by the formula (A) of preferably 0.5 or more times and 3.0 or less times, more preferably 0.6 or more times and 2.5 or less times, and further preferably 0.8 or more and 2.0 or less times of a mole number of the polymerization initiator to be added. From the viewpoint that the thus obtained modified conjugated diene-based polymer has a modification ratio, a molecular weight, and a branch structure respectively falling in more preferable ranges, the amount is preferably 0.5 times or more. Besides, from the viewpoint of suppressing deterioration of processability due to an excessively high branch number, the amount is preferably 3.0 times or less.

More specifically, the amounts of the polymerization initiator and the coupling modifier represented by the formula (A) to be added may be adjusted so that the mole number of the polymerization initiator can be preferably 3.0

times or more, and more preferably 4.0 times or more of the mole number of the coupling modifier represented by the formula (A).

Examples of the coupling modifier represented by formula (B) include, but are not especially limited to, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, and tris(4-trimethoxysilylbutyl)amine.

Among these, from the viewpoint of increasing reactivity and interaction between the conjugated diene-based polymer and the inorganic filler such as silica, and from the viewpoint of increasing processability, one represented by the formula (B) wherein n, m, and l are all 3 is preferred. Specific examples include tris(3-trimethoxysilylpropyl)amine, and tris(3-triethoxysilylpropyl)amine.

A reaction temperature and a reaction time in the coupling step using the coupling modifier represented by the formula (B) are not especially limited, and the reaction is performed at preferably 0°C or more and 120°C or less, and for preferably 30 seconds or more.

The amount of the coupling modifier represented by the formula (B) to be added corresponds to a total mole number of an alkoxy group bonded to a silyl group of the compound represented by the formula (B) of preferably 0.5 or more times and 3.0 or less times, more preferably 0.6 or more times and 2.5 or less times, and further preferably 0.8 or more and 2.0 or less times of a mole number of the polymerization initiator to be added. From the viewpoint that the thus obtained modified conjugated diene-based polymer has a modification ratio, a molecular weight, and a branch structure respectively falling in more preferable ranges, the amount is preferably 0.5 times or more. Besides, from the viewpoint of suppressing deterioration of processability due to an excessively high branch number, the amount is preferably 3.0 times or less.

More specifically, the amounts of the polymerization initiator and the coupling modifier represented by the formula (B) to be added may be adjusted so that the mole number of the polymerization initiator can be preferably 4.0 times or more, and more preferably 5.0 times or more of the mole number of the coupling modifier represented by the formula (B).

In the formula (C), A is preferably represented by any one of the following formulas (iii) to (vi):

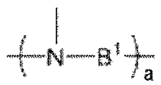

(iii)

In the formula (iii), $B^1$ represents a single bond or a bivalent hydrocarbon group having 1 to 20 carbon atoms, and a represents an integer of 1 to 10. $B^1$, if present in a plural number, is respectively independent.

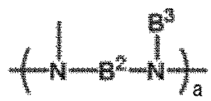

(iv)

In the formula (iv), $B^2$ represents a single bond or a bivalent hydrocarbon group having 1 to 20 carbon atoms, $B^3$ represents an alkyl group having 1 to 20 carbon atoms, and a represents an integer of 1 to 10. Each of $B^2$ and $B^3$, if present in a plural number, is respectively independent.

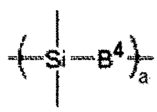

(v)

In the formula (v), $B^4$ represents a single bond or a bivalent hydrocarbon group having 1 to 20 carbon atoms, and a represents an integer of 1 to 10. $B^4$, if present in a plural number, is respectively independent.

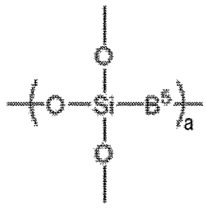

(vi)

In the formula (vi), $B^5$ represents a single bond or a bivalent hydrocarbon group having 1 to 20 carbon atoms, and a represents an integer of 1 to 10. $B^5$, if present in a plural number, is respectively independent.

In the formula (C), a coupling modifier in which A is represented by the formula (iii) is not especially limited, and examples include tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, tris[3-(2,2-dimethoxy-1-aza-2-silacyclopentane)propyl]-(3-trimethoxysilylpropyl)1,3-propanediamine, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, tris(3-triethoxysilylpropyl)-[3-(2,2-diethoxy-1-aza-2-silacyclopentane)propyl]-1,3-propanediamine, bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)proypl]-1,3-bisaminomethycyclohexane, bis(3-trimethoxysilylpropyl)-bis[3-(2,2-dimethoxy-1-aza-2-silacyclopentane)propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-2-azacyclopentane)propyl]-1,3-bisaminomethylcyclohexane, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-biasminomethylcyclohexane, tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine and pentakis(3-trimethoxysilylpropyl)-diethylenetriamine.

In the formula (C), a coupling modifier in which A is represented by the formula (iv) is not especially limited, and examples include tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis[3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane)propyl]-methyl-1,3-propanediamine, bis[3-(2,2-diethoxy-1-aza-2-silacyclopentane)propyl]-(3-triethoxysilylpropyl)-methyl-1,3-propanediamine, $N^1$,$N^{1'}$-(propane-1,3-diyl)bis($N^1$-methyl-$N^3$,$N^3$-bis(3-(trimethoxysilyl)propyl)-1,3-propanediamine) and $N^1$-(3-(bis(3-(trimethoxysilyl)propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

In the formula (C), a coupling modifier in which A is represented by the formula (v) is not especially limited, and examples include tetrakis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis[3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis[3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

Examples of the coupling modifier represented by formula (C) wherein A is represented by formula (vi) include, but are not especially limited to, 3-tris[2-(2,2-dimethoxy-1-aza-2-silacyclopentane)ethoxy]silyl-1-(2,2-dimethoxy-1-aza-2-silacyclopentane)propane, and 3-tris[2-(2,2-dimethoxy-1-aza-2-silacyclopentane)ethoxy]silyl-1-trimethoxysilylpropane.

In the formula (C), it is more preferable that A is represented by the formula (iii) or the formula (iv), and that k is 0. A conjugated diene-based polymer obtained by using such a coupling modifier tends to be further excellent in abrasion resistance and a low hysteresis loss property obtained when in the form of a vulcanizate. Such a coupling modifier is not especially limited, and examples include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine.

In the formula (C), it is more preferable that A is represented by the formula (iii) or the formula (iv), that k is 0, and that a is an integer of 2 to 10 in the formula (iii) or the formula (iv). A conjugated diene-based polymer obtained by using such a coupling modifier tends to be further excellent in abrasion resistance and a low hysteresis loss property obtained when in the form of a vulcanizate. Examples of such a coupling modifier include, but are not especially limited to, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and $N^1$-(3-(bis(3-(trimethoxysilyl)propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

The amount of the coupling modifier represented by the formula (C) to be added is preferably determined based on a ratio between the mole number of the polymerization initiator to be added and the mole number of the coupling modifier represented by the formula (C) to be added. Thus, the conjugated diene-based polymer and the modifier can be adjusted to react with each other in a desired stoichiometric ratio, and as a result, there is a tendency that a conjugated diene-based polymer having a desired star polymer structure can be obtained.

More specifically, the amounts of the polymerization initiator and the amount of the coupling modifier represented by the formula (C) to be added may be adjusted so that the mole number of the polymerization initiator can be preferably 5.0 times or more, and more preferably 6.0 times or more of the mole number of the coupling modifier represented by the formula (C). In this case, the number of functional groups of the modifier in the formula (C) (for example, when i and j are 2 or more, each of w and x is present in a plural number, and plural ws and xs are respectively equal, w x i + (x + 1) x j + k) is preferably an integer of 5 to 10, and more preferably an integer of 6 to 10.

The coupling modifier represented by the formula (D) is not especially limited, and examples include N-(1,3-dimethylbutylidene)-3-(triethoxysilyl)-1-propanamine, N-(1,3-dimethylbutylidene)-3-(trimethoxysilyl)-1-propanamine, N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-(triethoxysilyl)propane-1-amine, N-benzylidene-3-(trimethoxysilyl)propane-1-amine, N-benzylidene-3-methyl(dimethoxysilyl)propane-1-amine, N-benzylidene-3-methyl(diethoxysilyl)propane-1-amine, N-4-methylbenzylidene-3-(triethoxysilyl)propane-1-amine, N-4-methylbenzylidene-3-(trimethoxysilyl)propane-1-amine, N-4-methylbenzylidene-3-methyl(dimethoxysilyl)propane-1-amine, N-4-methylbenzylidene-3-methyl(diethoxysilyl)propane-1-amine, N-naphtylidene-3-(triethoxysilyl)propane-1-amine, N-naphtylidene-3-(trimethoxysilyl)propane-1-amine, N-naphtylidene-3-methyl(dimethoxysilyl)propane-1-amine, 1,1-(1,4-phenylene)bis (N-(3(triethoxysilyl)propyl)methanamine), 1,1-(1,4-phenylene)bis(N-(3(trimethoxysilyl)propyl)methanamine), 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-methoxy-2-methyl-1-(benzylideneaminoethyl)-1-aza-2-silacyclopentane, 2-methoxy-2-methyl-1-(p-methoxybenzylideneaminoethyl)-1-aza-2-silacyclopentane, 2-ethoxy-2-methyl-1-(benzylideneaminoethyl)-1-aza-2-silacyclopentane, and 2-methoxy-2-methyl-1-(methylisobutylideneaminoethyl)-1-aza-2-silacyclopentane.

A reaction temperature and a reaction time in the coupling step using the coupling modifier represented by the formula (D) are not especially limited, and the reaction is performed at preferably 0°C or more and 120°C or less, and for preferably 30 seconds or more.

The amount of the coupling modifier represented by the formula (D) to be added corresponds to a total mole number of an alkoxy group ($OR^{40}$) bonded to a silyl group of the compound represented by the formula (D) of preferably 0.2 or more times and 2.0 or less times, and more preferably 0.3 or more times and 1.5 or less times of a mole number of the polymerization initiator to be added. From the viewpoint that the thus obtained modified conjugated diene-based polymer has a modification ratio, and a molecular weight respectively falling in more preferable ranges, the amount is preferably 0.2 times or more. Besides, from the viewpoint of suppressing deterioration of processability due to an excessively high branch number, the amount is preferably 2.0 times or less.

More specifically, the amounts of the polymerization initiator and the coupling modifier represented by the formula (D) to be added may be adjusted so that the mole number of the polymerization initiator can be preferably 0.5 times or more, and more preferably 1.0 times or more of the mole number of the coupling modifier represented by the formula (D).

The production method of the present embodiment may include, after the coupling step, and/or before the coupling step, a condensation reaction step of causing a condensation reaction by adding a condensation accelerator.

The production method of the present embodiment may include, instead of the coupling step, a modifying step using a modifier except for the coupling modifier.

The production method of the present embodiment may include a hydrogenating step of hydrogenating a conjugated diene portion in the modified conjugated diene-based polymer or the conjugated diene-based polymer. As a method for hydrogenating a conjugated diene portion in the modified conjugated diene-based polymer or the conjugated diene-based polymer is not especially limited, and any of known methods can be employed.

As a preferable hydrogenating step, a method for hydrogenating a conjugated diene portion of the modified conjugated diene-based polymer or the conjugated diene-based polymer by blowing gaseous hydrogen into a polymer solution in the presence of a catalyst can be employed. The catalyst to be used is not especially limited, and examples include heterogeneous catalysts such as a catalyst containing a noble metal supported on a porous inorganic substance; and homogenous catalysts such as a catalyst obtained by reacting a solubilized salt of nickel, cobalt or the like with organic aluminum or the like, and a catalyst using metallocene such as titanocene. Among these catalysts, from the viewpoint that a milder hydrogenation condition can be selected, a titanocene catalyst is preferred. In addition, an example of a method for hydrogenating an aromatic group of the modified conjugated diene-based polymer or the conjugated diene-based polymer includes a method using a noble metal-supported catalyst.

Alternatively, an example of a hydrogenating step not using gaseous hydrogen includes a method in which a hydrogenation catalyst and a polymer solution are brought into contact with each other. Such a hydrogenation catalyst is not especially limited, and examples include (1) a supported heterogeneous hydrogenation catalyst obtained by supporting a metal such as Ni, Pt, Pd or Ru on carbon, silica, alumina or diatomite, (2) what is called a Ziegler catalyst using an organic acid salt of Ni, Co, Fe, Cr or the like, or a transition metal salt such as acetylacetone salt, and a reducing agent such as organic aluminum, and (3) what is called an organic metal complex such as an organic metal compound of Ti, Ru, Rh, Zr of the like. Furthermore, other examples of the hydrogenation catalyst are not especially limited but include known hydrogenation catalysts described in, for example, Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, Japanese Patent Publication No. 2-9041, and Japanese Patent Laid-Open No. 8-109219. A preferable hydrogenation catalyst is a reaction mixture of a titanocene compound and a reducing organic metal compound.

In the production method of the present embodiment, after the coupling step, a deactivator, and/or a neutralizer may be added if necessary to the resultant polymer solution.

The deactivator is not especially limited, and examples include water, and alcohols such as methanol, ethanol and isopropanol.

The neutralizer is not especially limited, and examples include carboxylic acids such as stearic acid, oleic acid

and versatic acid (a mixture of highly branched carboxylic acids having 9 to 11 carbon atoms, and containing a principal component having 10 carbon atoms), an aqueous solution of an inorganic acid, and a carbon dioxide gas.

The production method of the present embodiment may include a step of obtaining the resultant conjugated diene-based polymer from the polymer solution. As a method for this, any of known methods can be employed, and for example, the following methods may be employed. Examples of the method include a method in which the polymer is filtered after separating the solvent by steam stripping or the like, and the resultant is dehydrated and dried to obtain the polymer, a method in which the solution is concentrated in a flushing tank, and the resultant is devolatilized by using a bent extruder or the like to obtain the polymer, and a method in which the solution is directly devolatilized by using a drum dryer or the like to obtain the polymer.

(Conjugated Diene-based Polymer Composition)

A conjugated diene-based polymer composition of the present embodiment contains 100 parts by mass of a conjugated diene-based polymer, and 1.0 part by mass or more and 60 parts by mass or less of a rubber softener. When a rubber softener is added to the conjugated diene-based polymer of the present embodiment, a composition further improved in processability obtained when a filler and the like are compounded can be obtained.

The rubber softener is not especially limited, and examples include an extender oil, a liquid rubber, a resin or the like.

Examples of the extender oil include an aroma oil, a naphthenic oil and a paraffin oil. Among these, from the viewpoint of environmental safety, and from the viewpoint of oil bleeding prevention and improvement of wet grip performance, an aroma-alternative oil containing 3% by mass or less of a polycyclic aromatic (PCA) component according to the IP 346 is preferred. The aroma-alternative oil is not especially limited, and examples include TDAE (Threated Distillate Aromatic Extracts), and MES (Mild Extraction Solvate) mentioned in Kautschuk Gummi Kunststoffe 52 (12) 799 (1999), and RAE (Residual Aromatic Extracts).

The liquid rubber is not especially limited, and examples include liquid polybutadiene, and liquid styrene-butadiene rubber.

When a liquid rubber is used as the rubber softener, not only the above-described effect can be attained, but also the glass transition temperature of the resultant conjugated diene-based polymer composition can be lowered, and therefore, abrasion resistance, a low hysteresis loss property, and a low temperature characteristic of a vulcanizate obtained therefrom tend to be further improved.

The resin is not especially limited, and examples include an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenolformaldehyde resin, a xylene-formaldehyde resin, a monoolefin oligomer, a diolefin oligomer, an aromatic hydrocarbon resin, an aromatic petroleum resin, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol. One of these resins may be singly used, or two or more of these may be used together. When such a resin is hydrogenated, all unsaturated groups may be hydrogenated, or some may be left not hydrogenated.

When a resin is used as the rubber softener, not only the above-described effect can be attained, but also fracture strength of a vulcanizate of the resultant conjugated diene-based polymer composition tends to be further improved.

The amount of the rubber softener to be added is not especially limited as long as it is 1.0 part by mass or more and 60 parts by mass or less with respect to 100 parts by mass of the conjugated diene-based polymer of the present embodiment, and is preferably 3.0 parts by mass or more and 50 parts by mass or less, and more preferably 5.0 parts by mass or more and 40 parts by mass or less, and further preferably 10 parts by mass or more and 35 parts by mass or less. When the rubber softener is added in an amount falling in the above-described range, there is a tendency that processability obtained with a filler and the like compounded is further better, and that fracture strength and abrasion resistance of a vulcanizate obtained therefrom are further better.

A method for adding the rubber softener to the conjugated diene-based polymer is not especially limited, and for example, a method in which the rubber softener is added to a solution of the conjugated diene-based polymer to be mixed, and the resultant polymer solution is desolvated can be employed.

From the viewpoint of preventing gel formation, and from the viewpoint of improving stability in processing, the conjugated diene-based polymer composition of the present embodiment may further contain a rubber stabilizer.

The rubber stabilizer is not especially limited, any of known ones can be used, and examples include antioxidants such as 2,6-di-tert-butyl-4-hydroxytoluene (hereinafter also referred to as "BHT"), n-octadecyl-3-(4'-hydroxy-3',5'-di-tert-butylphenol)propionate, and 2-methyl-4,6-bis[(octylthio)methyl]phenol.

(Rubber Composition)

A rubber composition of the present embodiment contains a rubber component, and 5.0 parts by mass or more and 150 parts by mass or less of a filler with respect to 100 parts by mass of the rubber component, and the rubber component contains 10 parts by mass or more of the conjugated diene-based polymer or the conjugated diene-based polymer composition of the present embodiment with respect to 100 parts by mass of the total amount of the rubber component. When the filler is dispersed in the rubber component containing the conjugated diene-based polymer of the present embodiment, a rubber composition further excellent in processability in vulcanization, and further excellent in a low hysteresis loss property, fracture performance, and abrasion resistance of a vulcanizate obtained therefrom can be obtained. When the rubber component contains the conjugated diene-based polymer or the conjugated diene-based polymer composition of the present embodiment at a prescribed rate, low fuel composition performance, processability, and abrasion resistance are further improved.

The filler is not especially limited, and examples include a silica-based inorganic filler, carbon black, a metal oxide, and a metal hydroxide. Among these, a silica-based inorganic filler is preferred. In particular, when the rubber composition of the present embodiment is used in a tire, a vehicle component such as an anti-vibration rubber, or a vulcanized rubber for shoes or the like, a silica-based inorganic filler is particularly preferably contained. One of these fillers may be singly used, or two or more of these may be used together.

The silica-based inorganic filler is not especially limited, any of known fillers can be used, a solid particle containing $SiO_2$ or $Si_3Al$ as a constituent unit is preferred, and a solid particle containing $SiO_2$ or $Si_3Al$ as a principal component of a constituent unit is more preferred. Here, the principal component refers to a component contained in the silica-based inorganic filler in an amount of over 50% by mass, preferably 70% by mass or more, and more preferably 80% by mass or more.

A specific silica-based inorganic filler is not especially limited, and examples include silica, clay, talc, mica, diatomite, wollastonite, montmorillonite, zeolite and inorganic fibrous substances such as glass fiber. Alternatively, a silica-based inorganic filler having a hydrophobized surface, and a mixture of a silica-based inorganic filler and an inorganic filler except for silica may be used. Among these, from the viewpoint of further improving strength and abrasion resistance of the rubber composition, silica or glass fiber is preferred, and silica is more preferred. The silica is not especially limited, and examples include dry silica, wet silica and synthetic silicate silica. Among these silica, wet silica is preferred from the viewpoint of further improving fracture strength of the resultant rubber composition.

From the viewpoint of more definitely obtaining a rubber composition having practically good abrasion resistance and fracture strength, a nitrogen adsorption specific surface area, obtained by the BET adsorption method, of the silica-based inorganic filler is preferably 100 $m^2/g$ or more and 300 $m^2/g$ or less, and more preferably 170 $m^2/g$ or more and 250 $m^2/g$ or less. Besides, a silica-based inorganic filler having a comparatively small specific surface area (for example, a specific surface area of 200 $m^2/g$ or less) and a silica-based inorganic filler having a comparatively large specific surface area (for example, 200 $m^2/g$ or more) can be used in combination if necessary. In the present embodiment, when a silica-based inorganic filler having a comparatively large specific surface area (of, for example, 200 $m^2/g$ or more) is used in particular, the conjugated diene-based polymer or the conjugated diene-based polymer composition is further improved in dispersibility of silica. As a result, the resultant rubber composition tends to have further excellent abrasion resistance, fracture strength, and low hysteresis loss property.

Carbon black is not especially limited, and examples include carbon blacks of SRF, FEF, HAF, ISAF and SAF classes. Among these, a carbon black having a nitrogen adsorption specific surface area of 50 $m^2/g$ or more and dibutyl phthalate (DBP) oil absorption of 80 mL/100 g or less is preferred.

The metal oxide is not especially limited as long as it is a solid particle containing a principal component of a constituent unit represented by chemical formula $M_xO_y$ (wherein M represents a metal atom, and x and y each independently represent an integer of 1 to 6), and examples include alumina, titanium oxide, magnesium oxide, and zinc oxide.

The metal hydroxide is not especially limited, and examples include aluminum hydroxide, magnesium hydroxide, and zirconium hydroxide.

A content of the filler in the rubber composition of the present embodiment is 5.0 parts by mass or more and 150 parts by mass or less, preferably 20 parts by mass or more and 100 parts by mass or less, and more preferably 30 parts by mass or more and 90 parts by mass or less with respect to 100 parts by mass of the rubber component. When the filler is contained in the above-described range, there is a tendency that the rubber composition is further excellent in processability in vulcanization, and is further excellent in a low hysteresis loss property, fracture performance, and abrasion resistance of a vulcanizate obtained therefrom.

From the viewpoint of definitely imparting performances required in use as a tire or the like such as dry grip performance and conductivity, the rubber composition of the present embodiment preferably contains 0.5 parts by mass or more and 100 parts by mass or less of carbon black with respect to 100 parts by mass of the rubber component containing the conjugated diene-based polymer. From a similar viewpoint, the rubber composition contains carbon black in an amount of more preferably 3.0 parts by mass or more and 100 parts by mass or less, and further preferably 5.0

parts by mass or more and 50 parts by mass or less with respect to 100 parts by mass of the rubber component containing the conjugated diene-based polymer.

The rubber composition of the present embodiment may further contain a silane coupling agent. When the rubber composition contains a silane coupling agent, interaction between the rubber component and the filler can be further improved. The silane coupling agent is not especially limited, and is, for example, preferably a compound containing, in one molecule, a sulfur bond portion and an alkoxysilyl group or silanol group portion. Such a compound is not especially limited, and examples include bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less with respect to 100 parts by mass of the filler. When the content of the silane coupling agent falls in the above-described range, there is a tendency that the interaction between the rubber component and the filler can be further improved.

The rubber composition of the present embodiment may contain, as the rubber component, a rubber-like polymer different from the conjugated diene-based polymer of the present embodiment (hereinafter simply referred to as the "rubber-like polymer").

The rubber-like polymer is not especially limited, and examples include a conjugated diene-based polymer and a hydrogenated product thereof, a random copolymer of a conjugated diene-based compound and a vinyl aromatic compound, and a hydrogenated product thereof, a block copolymer of a conjugated diene-based compound and a vinyl aromatic compound, and a hydrogenated product thereof, a non-diene-based polymer and a natural rubber.

A specific rubber-like polymer is not especially limited, and examples include a butadiene rubber and a hydrogenated product thereof, an isoprene rubber and a hydrogenated product thereof, styrene-based elastomers such as a styrene-butadiene rubber and a hydrogenated product thereof, a styrene-butadiene block copolymer and a hydrogenated product thereof, and a styrene-isoprene block copolymer and a hydrogenated product thereof, and an acrylonitrile-butadiene rubber and a hydrogenated product thereof.

The non-diene-based polymer is not especially limited, and examples include olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an $\alpha,\beta$-unsaturated nitrile-acrylic acid ester-conjugated diene copolymer rubber, a urethane rubber and a polysulfide rubber.

The natural rubber is not especially limited, and examples include smoked sheets of RSS Nos. 3 to 5, SMR and epoxidized natural rubber.

The rubber-like polymer may be in the form of a modified rubber imparted with a functional group having polarity such as a hydroxyl group or an amino group. When the rubber composition of the present invention is used in a tire, the rubber-like polymer is preferably one or more selected from the group consisting of a butadiene rubber, an isoprene rubber, a styrene-butadiene rubber, a natural rubber and a butyl rubber.

The weight average molecular weight of the rubber-like polymer is preferably 2,000 or more and 2,000,000 or less, and more preferably 5,000 or more and 1,500,000 or less from the viewpoints of abrasion resistance, fracture strength, and balance between a low hysteresis loss property and processability of the resultant rubber composition. As the rubber-like polymer, a low molecular weight rubber-like polymer, that is, what is called a liquid rubber, can be used. One of these rubber-like polymers may be singly used, or two or more of these may be used together.

When the rubber composition of the present embodiment contains the conjugated diene-based polymer and the rubber-like polymer, a content ratio (in a mass ratio) of the conjugated diene-based polymer to the rubber-like polymer is, in terms of (the conjugated diene-based polymer/the rubber-like polymer), preferably 10/90 or more and 100/0 or less, more preferably 20/80 or more and 90/10 or less, and further preferably 30/70 or more and 80/20 or less. In other words, the rubber component contains, with respect to 100 parts by mass of the total amount of the rubber component, preferably 10 parts by mass or more and 100 parts by mass or less, more preferably 20 parts by mass or more and 90 parts by mass or less, and further preferably 30 parts by mass or more and 80 parts by mass or less of the conjugated diene-based polymer. When the ratio of the conjugated diene-based polymer contained in the rubber component falls in the above-described range, a vulcanizate of the rubber composition tends to be further excellent in abrasion resistance and a low hysteresis loss property.

To the rubber composition of the present embodiment, a rubber softener may be added in addition to the rubber component from the viewpoint of further improving the processability.

As the rubber softener, the same ones as those described as examples to be contained in the conjugated diene-based polymer composition can be used, and a mineral oil, or a liquid or low molecular weight synthetic softener is suitable.

A mineral oil-based rubber softener, which is used for softening, expanding and improving processability of a rubber and is designated as a process oil or an extender oil, is a mixture of an aromatic ring, a naphthene ring and a

paraffin chain. In particular, one in which the number of carbon atoms of the paraffin chain is 50% or more is designated as a paraffin-based softener, one in which the number of carbon atoms of the naphthene ring is 30% or more and 45% or less is designated as a naphthene-based softener, and one in which the number of carbon atoms belonging to the number of carbon atoms of aromatic carbons exceeds 30% of the number of all carbon atoms is designated as an aromatic-based softener. The rubber composition of the present embodiment preferably contains, as a rubber softener, one having an appropriate aromatic content. When such a rubber softener is contained, compatibility with the conjugated diene-based polymer is further improved.

The content of the rubber softener in the rubber composition is expressed as a sum of the amount of the rubber softener precedently added to the conjugated diene-based polymer composition or the rubber-like polymer, and the amount of the rubber softener added in forming the rubber composition.

In the rubber composition of the present embodiment, the content of the rubber softener is preferably 0 part by mass or more and 100 parts by mass or less, more preferably 10 parts by mass or more and 90 parts by mass or less, and further preferably 30 parts by mass or more and 90 parts by mass or less with respect to 100 parts by mass of the rubber component. When the content of the rubber softener is 100 parts by mass or less with respect to 100 parts by mass of rubber component, bleeding out can be suppressed, and the stickiness of the surface of the rubber composition can be further suppressed.

A method for mixing the conjugated diene-based polymer, the conjugated diene-based polymer composition, the rubber-like polymer, the filler, the silane coupling agent, the rubber softener and the like is not especially limited, and examples include a melt-kneading method using a general mixer such as an open roll, a Banbury mixer, a kneader, a single shaft screw extruder, a twin shaft screw extruder or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, the rubber component, the filler, the silane coupling agent, and the additive may be kneaded all together, or may be mixed dividedly in plural times.

The rubber composition of the present embodiment may be in the form of a vulcanizate obtained by vulcanization with a vulcanizing agent. The vulcanizing agent is not especially limited, and examples include radical generators such as organic peroxides and azo compounds, oxime compounds, nitroso compounds, polyamine compounds, sulfur and sulfur compounds. The sulfur compounds encompass sulfur monochloride, sulfur dichloride, disulfide compounds, high molecular weight polysulfide compounds and the like.

In the rubber composition of the present embodiment, the content of the vulcanizing agent is preferably 0.01 parts by mass or more and 20 parts by mass or less, and more preferably 0.1 parts by mass or more and 15 parts by mass or less with respect to 100 parts by mass of the rubber component. As a vulcanization method, any of conventionally known methods can be employed. A vulcanization temperature is preferably 120°C or more and 200°C or less, and more preferably 140°C or more and 180°C or less.

For the vulcanization of the rubber composition, a vulcanization accelerator and/or a vulcanization aid may be used if necessary. As the vulcanization accelerator, any of conventionally known materials can be used, and examples include, but are not especially limited to, sulphenamide-based, guanidine-based, thiuram-based, aldehyde-amine-based, aldehyde-ammonia-based, thiazole-based, thiourea-based and dithiocarbamate-based vulcanization accelerators. Besides, the vulcanization aid is not especially limited, and examples include zinc oxide and stearic acid. The contents of the vulcanization accelerator and the vulcanization aid are respectively preferably 0.01 parts by mass or more and 20 parts by mass or less, and more preferably 0.1 parts by mass or more and 15 parts by mass or less with respect to 100 parts by mass of the rubber component.

The rubber composition of the present embodiment may contain, as long as the effects of the present embodiment are not impaired, various additives such as another softener and filler excluding those described above, a heat resistance stabilizer, an antistatic agent, a weathering stabilizer, an anti-aging agent, a colorant and a lubricant. As the softener, any of known softeners can be used. The filler is not especially limited, and specific examples include calcium carbonate, magnesium carbonate, aluminum sulfate and barium sulfate. As the heat resistance stabilizer, the antistatic agent, the weathering stabilizer, the anti-aging agent, the colorant and the lubricant, any of known materials can be respectively used.

The rubber composition of the present embodiment is suitably used as a rubber composition for a tire. The rubber composition of the present embodiment can be suitably used in, but not especially limited to, various tires such as a fuel-efficient tire, an all-season tire, a high-performance tire and a studless tire; and various tire portions such as a tread, a carcass, a sidewall and a bead.

It is noted that each numerical range described above as a preferable range or the like may be a numerical range obtained by arbitrarily combining any one of values described as the upper limits and any one of values described as the lower limits even when not particularly stated.

Examples

The present embodiment will now be described in more detail with reference to specific examples and comparative examples, and it is noted that the present embodiment is not limited to the following examples and comparative examples at all.

Various physical properties of the examples and comparative examples were measured by the following methods.

(Physical Property 1) Average Molecular Weight measured by GPC Measurement

A conjugated diene-based polymer or a modified conjugated diene-based polymer was used as a sample for performing GPC measurement using a GPC measurement apparatus (trade name "HLC-8320GPC" manufactured by Tosoh Corporation) including a series of three columns using a polystyrene-based gel as a filler, and an RI detector (trade name "HLC8020" manufactured by Tosoh Corporation). On the basis of a calibration curve obtained using standard polystyrene, a weight average molecular weight (Mw), a number average molecular weight (Mn) and a molecular weight distribution (Mw/Mn) were obtained.

As an eluent, a 5 mmol/L triethylamine-THF (tetrahydrofuran) solution was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.

Ten (10) mg of a sample for the measurement was dissolved in 10 mL of THF to obtain a measurement solution, and 10 μL of the measurement solution was injected into the GPC measurement apparatus for performing the measurement under conditions of an oven temperature of 40°C and a THF flow rate of 0.35 mL/min.

Measurement results thus obtained were defined as the respective average molecular weights of the sample.

(Physical Property 2) Mooney Viscosity of Polymer

A conjugated diene-based polymer or a modified conjugated diene-based polymer was used as a sample to measure a Mooney viscosity by using a Mooney viscometer (trade name "VR1132" manufactured by Ueshima Seisakusho Co., Ltd.) in accordance with ISO 289 with an L-type rotor used.

A measurement temperature was 110°C when a conjugated diene-based polymer was used as a sample, and was 100°C when a modified conjugated diene-based polymer was used as a sample.

After a sample was preheated at the test temperature for 1 minute, the rotor was rotated at 2 rpm, and a torque was measured 4 minutes after to measure a Mooney viscosity ($ML_{(1+4)}$).

(Physical Property 3) Branch Number (Bn)

The branch number (Bn) of a conjugated diene-based polymer or a modified conjugated diene-based polymer was measured by viscosity detector-equipped GPC-light scattering measurement as follows. A conjugated diene-based polymer or a modified conjugated diene-based polymer was used as a sample, and a GPC measurement apparatus (trade name "GPCmax VE-2001" manufactured by Malvern Panalytical Ltd.) including a series of three columns using a polystyrene-based gel as a filler, and a detector (trade name "TDA305" manufactured by Malvern Panalytical Ltd.) including a light scattering detector, an RI detector, and a viscosity detector connected in the stated order were used. Based on standard polystyrene, an absolute molecular weight was obtained from results obtained by using the light scattering detector and the RI detector, and an intrinsic viscosity was obtained from results obtained by using the RI detector and the viscosity detector.

As an eluent, a 5 mmol/L triethylamine-tetrahydrofuran solution was used.

As the columns, columns of trade names "TSKgel G4000HXL", "TSKgel G5000HXL" and "TSKgel G6000HXL" manufactured by Tosoh Corporation were connected in the stated order to be used.

Twenty (20) mg of a sample for the measurement was dissolved in 10 mL of THF to obtain a measurement solution, and 100 μL of the measurement solution was injected into the GPC measurement apparatus for performing the measurement under conditions of an oven temperature of 40°C and a THF flow rate of 1 mL/min.

For each sample, an intrinsic viscosity $[\eta_0]$ of a straight-chain polymer having the same absolute molecular weight M was calculated in accordance with the expression of $[\eta_0] = -3.626\ M^{0.730}$, and a ratio between the measured intrinsic viscosity $[\eta]$ and the calculated intrinsic viscosity $[\eta_0]$ ($[\eta]/[\eta_0]$) was defined as a contracting factor (g').

Thereafter, the thus obtained contracting factor (g') was used to calculate a branch number (Bn) based on the expression of g' = 6 Bn/{(Bn + 1)(Bn + 2)}.

(Physical Property 4) Modification Ratio

A modification ratio of a modified conjugated diene-based polymer was measured by column adsorption GPC as follows. Column adsorption GPC is a method for obtaining a modification ratio of a modified polymer by utilizing a characteristic that a modified basic polymer component of the modified conjugated diene-based polymer easily adsorbs onto a GPC column using a silica-based gel as a filler.

A modified conjugated diene-based polymer was used as a sample to measure a sample solution containing the sample and low molecular weight internal standard polystyrene with a polystyrene-based column. Besides, the same sample solution was measured with a silica-based column. A difference between a chromatogram obtained by the measurement with the polystyrene-based column and a chromatogram obtained by the measurement with the silica-based column was obtained to measure the amount of the modified conjugated diene-based polymer adsorbed onto the silica-based column, and thus, a modification ratio was obtained.

Ten (10) mg of a sample and 5 mg of standard polystyrene were dissolved in 20 mL of THF to obtain a sample solution. A modification ratio of a modified conjugated diene-based polymer was measured under the following measurement conditions:

(GPC measurement conditions in using polystyrene-based column)

The GPC measurement was performed using an apparatus of trade name "HLC-8320GPC" manufactured by Tosoh Corporation and a reflex index (RI) detector (trade name "HLC8020" manufactured by Tosoh Corporation).

A 5 mmol/L triethylamine-THF solution was used as an eluent, and 10 μL of a sample solution was injected into the GPC apparatus to obtain a chromatogram under conditions of a column oven temperature of 40°C and a THF flow rate of 0.35 mL/min.

As the columns, a series of three columns of trade name "TSKgel Super Multipore HZ-H" manufactured by Tosoh Corporation were connected with a column of trade name "TSKguardcolumn SuperMP(HZ)-H" manufactured by Tosoh Corporation connected as a guard column at a previous stage to be used.

(GPC measurement conditions using silica-based column)

The GPC measurement was performed using an apparatus of trade name "HLC-8320GPC" manufactured by Tosoh Corporation and an RI detector (trade name "HLC8020" manufactured by Tosoh Corporation).

THF was used as an eluent, and 50 μL of a sample solution was injected into the GPC apparatus to obtain a chromatogram under conditions of a column oven temperature of 40°C and a THF flow rate of 0.5 mL/min.

A series of columns of trade names "Zorbax PSM-1000S", "PSM-300S" and "PSM-60S" manufactured by Agilent Technologies Japan Ltd., and a guard column of trade name "DIOL 4.6 x 12.5 mm 5 micron" connected at a previous stage were used.

Calculation method for modification ratio: In the chromatogram obtained by using the polystyrene-based column, assuming that the whole peak area was 100, a peak area P1 of the sample and a peak area P2 of standard polystyrene were obtained. Besides, in the chromatogram obtained by using the silica-based column, assuming that the whole peak area was 100, a peak area P3 of the sample and that a peak area P4 of standard polystyrene were obtained. A modification ratio (%) was obtained in accordance with the following expression:

$$\text{Modification ratio (\%)} = [1 - (P2 \times P3) / (P1 \times P4)] \times 100$$

wherein

$$P1 + P2 = P3 + P4 = 100$$

(Physical Property 5) Amount of Bound Aromatic Vinyl (Amount of Bound Styrene)

A conjugated diene-based polymer or a modified conjugated diene-based polymer was used as a sample, and 100 mg of the sample was dissolved in 100 mL of chloroform to obtain a measurement sample. Each sample was measured with a spectrophotometer (trade name "UV-2450" manufactured by Shimadzu Corporation) to obtain an absorption spectrum. Based on absorbance of UV light (in the vicinity of 254 nm) derived from a phenyl group of styrene, the amount of bound styrene (% by mass) in 100% by mass of the conjugated diene-based polymer or the modified conjugated diene-based polymer was calculated.

(Physical Property 6) Content of Vinyl Bond in Bound Conjugated Diene (Content of 1,2-Vinyl Bond in Bound Butadiene)

A conjugated diene-based polymer or a modified conjugated diene-based polymer was used as a sample, and 50 mg of the sample was dissolved in 10 mL of carbon disulfide to obtain a measurement sample. An infrared spectrum of each sample was measured in a range of 600 to 1,000 $cm^{-1}$ with Fourier transform infrared spectrophotometer (trade name "FT-IR230" manufactured by JASCO Corporation). In accordance with the Hampton method (method described by R. R. Hampton, Analytical Chemistry 21, 923 (1949)), a content of 1,2-vinyl bond (mol%) in bound butadiene was obtained based on absorbance at a prescribed wavelength.

(Physical Property 7) Molecular Weight obtained by GPC-light Scattering Measurement (Absolute Molecular Weight)

A conjugated diene-based polymer or a modified conjugated diene-based polymer was used as a sample, GPC measurement was performed with a GPC-light scattering measurement apparatus (trade name "Viscotek TDAmax" manufactured by Malvern Panalytical Ltd.) including a series of three columns using a polystyrene-based gel as a filler, and a weight average molecular weight was obtained based on a solution viscosity and light scattering measured with a detector. Hereinafter, such a weight average molecular weight measured by GPC-light scattering measurement is also referred to as the "absolute molecular weight".

As an eluent, a solution obtained by mixing 5 mL of triethylamine in 1 L of tetrahydrofuran was used.

As columns, a guard column: trade name "TSKguardcolumn HHR-H" manufactured by Tosoh Corporation, and columns: "TSKgel G6000HHR", "TSKgel G5000HHR", and "TSKgel G4000HHR" manufactured by Tosoh Corporation were connected in the stated order to be used.

Ten (10) mg of a sample for the measurement was dissolved in 20 mL of THF to obtain a measurement solution, and 200 μL of the measurement solution was injected into the GPC measurement apparatus for performing the measurement under conditions of an oven temperature of 40°C and a THF flow rate of 1.0 mL/min.

(Physical Property 8) Glass Transition Temperature (Tg)

A conjugated diene-based polymer or a modified conjugated diene-based polymer was used as a sample to perform DSC measurement in accordance with ISO 22768: 2006 with a differential scanning calorimeter (trade name "DSC 3200S" manufactured by Mac Science). A DSC curve was recorded with the temperature increased from -100°C at 20°C/min under a flow of 50 mL/min of helium, and a peak top (infection point) in a DSC differential curve thus obtained was defined as the glass transition temperature (Tg).

(Example 1) Modified Conjugated Diene-based Polymer (A1)

Two tank pressure vessels, each of which had an internal volume of 10 L and a ratio (L/D) of internal height (L) and diameter (D) of 4.0, had an inlet at a bottom and an outlet at a top, and was equipped with a stirrer and a temperature controlling jacket, were connected to each other as polymerizing branching reactors.

1,3-Butadiene, styrene and n-hexane, from which a water content had been precedently removed, were mixed under conditions of 16.6 g/min, 14.5 g/min and 113.2 g/min, respectively to be continuously supplied to the bottom of the first reactor. In this supply, immediately before the mixed solution entered the first reactor, n-butyllithium to be used for residual impurity inactivation was continuously added under a condition of 0.114 mmol/min while being mixed with a static mixer. Besides, at the same time as the supply of 1,3-butadiene, styrene, n-hexane, and n-butyllithium, 2,2-bis(2-oxolanyl)propane used as a polar material and n-butyllithium used as a polymerization initiator were supplied under conditions of respectively 0.080 mmol/min and 0.172 mmol/min to the bottom of the first reactor in which reaction solutions were vigorously stirred with the stirrer. In addition, additional 1,3-butadiene was added under a condition of 5.5 g/min through a supply port disposed at a height of 7/8 L from the bottom of the first reactor. It is noted that the internal temperature of the first reactor was kept at 77°C.

Solution of a conjugated diene-based polymer generated through a polymerization reaction caused in the first reactor was continuously taken out from the top of the first reactor to be continuously supplied to the bottom of the second reactor. It is noted that the solution continuously taken out from the top of the first reactor had been sufficiently stably polymerized. Simultaneously with supply of the conjugated diene-based polymer solution, trimethoxy(4-vinylphenyl)silane (hereinafter also referred to as "BS-1") as the branching agent was supplied from the bottom of the second reactor under a condition of 0.027 mmol/min. It is noted that the internal temperature of the second reactor was kept at 82°C. A small amount of the conjugated diene-based polymer solution was taken out from the outlet of the second reactor, an antioxidant (BHT) was added thereto to obtain an amount of 0.2 g per 100 g of the conjugated diene-based polymer, and then the solvent was removed after adding the antioxidant (BHT). Various average molecular weights (Physical Property 1) and a Mooney viscosity (Physical Property 2) of the thus obtained conjugated diene-based polymer

were measured. Measurement results are shown in Table 1.

Next, solution of a conjugated diene-based polymer having a branch structure generated through a branching reaction caused in the second reactor was continuously taken out from the top of the second reactor to be continuously supplied to the bottom of the second reactor. To the polymer solution continuously flowing to a static mixer, tetrakis(3-trimethoxysilylpropyl)-1,3-propanediamine (shown as "A" in Table 1) was continuously added as a coupling modifier under a condition of 0.029 mmol/min, and thus, the conjugated diene-based polymer having a branch structure was coupled. Here, a time until the addition of the coupling modifier to the polymer solution flowing out of the outlet of the second reactor was 4.8 min, the temperature of the polymer solution at which the coupling modifier was added was 68°C. Besides, a difference between the temperature of the polymer solution at the outlet of the second reactor and the temperature of the polymer solution in adding the coupling modifier was 2°C. A small amount of the modified conjugated diene-based polymer solution after the coupling was taken out, an antioxidant (BHT) was added thereto to obtain an amount of 0.2 g per 100 g of the polymer, and then the solvent was removed after adding the antioxidant (BHT). The amount of bound styrene (Physical Property 5) and the content of 1,2-vinyl bond in bound butadiene (Physical Property 6) of the thus obtained modified conjugated diene-based polymer were measured. Measurement results are shown in Table 1.

Next, to the polymer solution flowing out of the static mixer, solution of an antioxidant (BHT) in n-hexane was added to obtain an amount of the antioxidant (BHT) of 0.2 g per 100 g of the polymer continuously under a condition of 0.055 g/min to complete the coupling reaction. Simultaneously with the antioxidant, an S-RAE oil (JOMO Process NC 140, manufactured by JX Nippon Oil & Energy Corporation) was continuously added as a rubber softener to obtain an amount of the S-RAE oil of 25.0 g per 100 g of the polymer, and the resultant was mixed with a static mixer. The solvent was removed by steam stripping, and thus, a modified conjugated diene-based polymer (A1) was obtained. The modified conjugated diene-based polymer (A1) had, in a part of a main chain, a 4-branched structure derived from the branching agent corresponding to a compound represented by the following formula (1), and had a 3-branched star polymer structure derived from the coupling modifier. Physical properties of the modified conjugated diene-based polymer (A1) are shown in Table 1. The structure of the modified conjugated diene-based polymer was identified by comparing a polymer before the addition of the branching agent, a polymer after the addition of the branching agent, and a polymer after the addition of the coupling modifier in the average molecular weight obtained by GPC measurement and the branch number obtained by viscosity detector-equipped GPC-light scattering measurement. Hereinafter, the structure of each sample was similarly identified.

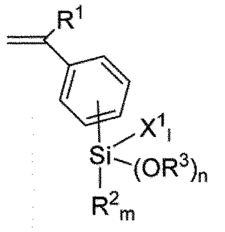

(1)

In the formula (1), $R^1$ represents a hydrogen atom, an alkyl group having 1 to 20 carbon atoms, or an aryl group having 6 to 20 carbon atoms, and may have a branch structure in a part thereof; $R^2$ and $R^3$ each independently represent an alkyl group having 1 to 20 carbon atoms, or an aryl group having 6 to 20 carbon atoms, and may have a branch structure in a part thereof; $X^1$ each represents an independent halogen atom; and m represents an integer of 0 to 2, n represents an integer of 0 to 3, l represents an integer of 0 to 3, and a sum of m, n, and l is 3.

(Example 2) Modified Conjugated Diene-based Polymer (A2)

A modified conjugated diene-based polymer (A2) was obtained in the same manner as in Example 1 except that 1,3-butadiene was supplied under a condition of 19.2 g/min, that styrene was supplied under a condition of 9.5 g/min, that n-hexane was supplied under a condition of 115.4 g/min, that n-butyllithium for treating residual impurity was supplied under a condition of 0.094 mmol/min, that n-butyllithium as the polymerization initiator was supplied under a condition of 0.208 mmol/min, that additional 1,3-butadiene was supplied under a condition of 6.4 g/min, that BS-1 as the branching agent was supplied under a condition of 0.028 mmol/min, and that tetrakis(3-trimethoxysilylpropyl)-1,3-propanediamine as the coupling modifier was supplied under a condition of 0.028 mmol/min. Physical properties of A2 are shown in Table 1.

(Example 3) Modified Conjugated Diene-based Polymer (A3)

A modified conjugated diene-based polymer (A3) was obtained in the same manner as in Example 1 except that 1,3-butadiene was supplied under a condition of 20.9 g/min, that styrene was supplied under a condition of 10.4 g/min, that n-hexane was supplied under a condition of 108.2 g/min, that n-butyllithium for treating residual impurity was supplied under a condition of 0.062 mmol/min, that 2,2-bis(2-oxolanyl)propane as the polar compound was supplied under a condition of 0.067 mmol/min, that n-butyllithium as the polymerization initiator was supplied under a condition of 0.151 mmol/min, that additional 1,3-butadiene was supplied under a condition of 6.9 g/min, that BS-1 as the branching agent was supplied under a condition of 0.017 mmol/min, and that N-benzylidene-3-(triethoxysilyl)propane-1-amine (shown as "b" in Table 1) was used as the coupling modifier instead of tetrakis(3-trimethoxysilylpropyl)-1,3-propanediamine, and that the condition for supplying the coupling modifier was changed to 0.086 mmol/min. Physical properties of A3 are shown in Table 1.

(Example 4) Modified Conjugated Diene-based Polymer (A4)

A modified conjugated diene-based polymer (A4) was obtained in the same manner as in Example 1 except that 1,3-butadiene was supplied under a condition of 20.3 g/min, that styrene was supplied under a condition of 5.9 g/min, that n-hexane was supplied under a condition of 115.4 g/min, that n-butyllithium for treating residual impurity was supplied under a condition of 0.104 mmol/min, that 2,2-bis(2-oxolanyl)propane as the polar compound was supplied under a condition of 0.041 mmol/min, that n-butyllithium as the polymerization initiator was supplied under a condition of 0.208 mmol/min, that additional 1,3-butadiene was supplied under a condition of 6.8 g/min, that BS-1 as the branching agent was supplied under a condition of 0.010 mmol/min, and that tetrakis(3-trimethoxysilylpropyl)-1,3-propanediamine as the coupling modifier was supplied under a condition of 0.030 mmol/min, and that S-RAE oil as the rubber softener was supplied under such a condition as to obtain an amount of S-RAE oil of 5.0 g per 100 g of the polymer. Physical properties of A4 are shown in Table 1.

(Example 5) Modified Conjugated Diene-based Polymer (A5)

A modified conjugated diene-based polymer (A5) was obtained in the same manner as in Example 4 except that 2,2-dimethoxy-1-(3-trimethoxysilylpropyl)-1-aza-2-silacyclopentane (shown as "c" in Table 1) was used as the coupling modifier instead of tetrakis(3-trimethoxysilylpropyl)-1,3-propanediamine, and that the condition for supplying the coupling modifier was changed to 0.059 mmol/min. Physical properties of A5 are shown in Table 1.

(Example 6) Modified Conjugated Diene-based Polymer (A6)

A modified conjugated diene-based polymer (A6) was obtained in the same manner as in Example 4 except that styrene was supplied under a condition of 13.1 g/min, and that 2,2-bis(2-oxolanyl)propane as the polar compound was supplied under a condition of 0.058 mmol/min. Physical properties of A6 are shown in Table 1.

(Example 7) Modified Conjugated Diene-based Polymer (A7)

A modified conjugated diene-based polymer (A7) was obtained in the same manner as in Example 4 except that styrene was supplied under a condition of 13.1 g/min, that 2,2-bis(2-oxolanyl)propane as the polar compound was supplied under a condition of 0.035 mmol/min, that n-butyllithium as the polymerization initiator was supplied under a condition of 0.224 mmol/min, that BS-1 as the branching agent was supplied under a condition of 0.011 mmol/min, that tetrakis(3-trimethoxysilylpropyl)-1,3-propanediamine as the coupling modifier was supplied under a condition of 0.032 mmol/min, and that the internal temperature of the first reactor was set to 83°C and the internal temperature of the second reactor was set to 88°C. Physical properties of A7 are shown in Table 1.

(Example 8) Modified Conjugated Diene-based Polymer (A8)

A modified conjugated diene-based polymer (A8) was obtained in the same manner as in Example 4 except that 1,3-bis(N,N-diglycidylaminomethyl)cyclohexane (shown as "d" in Table 1) was used as the coupling modifier instead of tetrakis(3-trimethoxysilylpropyl)-1,3-propanediamine, and that the condition for supplying the coupling modifier was changed to 0.059 mmol/min. Physical properties of A8 are shown in Table 1.

(Example 9) Modified Conjugated Diene-based Polymer (A9)

A modified conjugated diene-based polymer (A9) was obtained in the same manner as in Example 4 except that tetrakis(3-trimethoxysilylpropyl)-1,3-propanediamine was supplied as the coupling modifier under a condition of 0.014 mmol/min. Physical properties of A9 are shown in Table 1.

(Example 10) Conjugated Diene-based Polymer (A10)

A conjugated diene-based polymer (A10) was obtained in the same manner as in Example 4 except that n-butyllithium as the polymerization initiator was supplied under a condition of 0.255 mmol/min, that 2,2-bis(2-oxolanyl)propane as the polar compound was supplied under a condition of 0.056 mmol/min, that BS-1 as the branching agent was supplied under a condition of 0.045 mmol/min, and that no coupling modifier was added. Physical properties of A10 are shown in Table 1.

(Example 11) Modified Conjugated Diene-based Polymer (A11)

A modified conjugated diene-based polymer (A11) was obtained in the same manner as in Example 4 except that 1,3-butadiene was supplied under a condition of 15.9 g/min, that styrene was supplied under a condition of 17.4 g/min, that 2,2-bis(2-oxolanyl)propane as the polar compound was supplied under a condition of 0.063 mmol/min, that n-butyllithium as the polymerization initiator was supplied under a condition of 0.312 mmol/min, that additional 1,3-butadiene was supplied under a condition of 5.3 g/min, that BS-1 as the branching agent was supplied under a condition of 0.014 mmol/min, and that tetrakis(3-trimethoxysilylpropyl)-1,3-propanediamine as the coupling modifier was supplied under a condition of 0.040 mmol/min, that the internal temperature of the first reactor was set to 83°C and the internal temperature of the second reactor was set to 88°C, and that no S-RAE oil as the rubber softener was added. Physical properties of A11 are shown in Table 1.

(Example 12) Modified Conjugated Diene-based Polymer (A12)

A modified conjugated diene-based polymer (A12) was obtained in the same manner as in Example 11 except that 2,2-bis(2-oxolanyl)propane as the polar compound was supplied under a condition of 0.052 mmol/min, that n-butyllithium as the polymerization initiator was supplied under a condition of 0.167 mmol/min, that BS-1 as the branching agent was supplied under a condition of 0.008 mmol/min, and that tetrakis(3-trimethoxysilylpropyl)-1,3-propanediamine as the coupling modifier was supplied under a condition of 0.019 mmol/min, that the internal temperature of the first reactor was set to 82°C and the internal temperature of the second reactor was set to 86°C, and that S-RAE oil as the rubber softener was added under such a condition as to obtain an amount of S-RAE oil of 25.0 g per 100 g of the polymer. Physical properties of A12 are shown in Table 1.

(Example 13) Modified Conjugated Diene-based Polymer (A13)

A modified conjugated diene-based polymer (A13) was obtained in the same manner as in Example 12 except that styrene was supplied under a condition of 19.8 g/min, that 2,2-bis(2-oxolanyl)propane as the polar compound was supplied under a condition of 0.081 mmol/min, that n-butyllithium as the polymerization initiator was supplied under a condition of 0.172 mmol/min, and that BS-1 as the branching agent was supplied under a condition of 0.009 mmol/min. Physical properties of A13 are shown in Table 2.

(Example 14) Modified Conjugated Diene-based Polymer (A14)

A modified conjugated diene-based polymer (A14) was obtained in the same manner as in Example 3 except that n-butyllithium for treating residual impurity was supplied under a condition of 0.104 mmol/min, that n-butyllithium as the polymerization initiator was supplied under a condition of 0.177 mmol/min, that 2,2-bis(2-oxolanyl)propane as the polar compound was supplied under a condition of 0.086 mmol/min, that BS-1 as the branching agent was supplied under a condition of 0.019 mmol/min, and that 1,3-bis(N,N-diglycidylaminomethyl)cyclohexane was used as the coupling modifier instead of tetrakis(3-trimethoxysilylpropyl)-1,3-propanediamine, and that the condition for supplying the coupling modifier was changed to 0.118 mmol/min. Physical properties of A14 are shown in Table 2.

(Example 15) Modified Conjugated Diene-based Polymer (A15)

A modified conjugated diene-based polymer (A15) was obtained in the same manner as in Example 1 except

that tetrakis(3-trimethoxysilylpropyl)-1,3-propanediamine as the coupling modifier was supplied under a condition of 0.020 mmol/min. Physical properties of A15 are shown in Table 2.

(Example 16) Modified Conjugated Diene-based Polymer (A16)

A modified conjugated diene-based polymer (A16) was obtained in the same manner as in Example 2 except that tetrakis(3-trimethoxysilylpropyl)-1,3-propanediamine as the coupling modifier was supplied under a condition of 0.019 mmol/min. Physical properties of A16 are shown in Table 2.

(Example 17) Modified Conjugated Diene-based Polymer (A17)

A modified conjugated diene-based polymer (A17) was obtained in the same manner as in Example 13 except that BS-1 as the branching agent was supplied under a condition of 0.015 mmol/min, and that tetrakis(3-trimethoxysilylpropyl)-1,3-propanediamine as the coupling modifier was supplied under a condition of 0.013 mmol/min. Physical properties of A17 are shown in Table 2.

(Example 18) Modified Conjugated Diene-based Polymer (A18)

A modified conjugated diene-based polymer (A18) was obtained in the same manner as in Example 5 except that n-butyllithium and piperidinolithium were used as the polymerization initiator, that n-butyllithium and piperidinolithium were supplied respectively under conditions of 0.062 mmol/min and 0.187 mmol/min, and that n-butyllithium for treating residual impurity was supplied under a condition of 0.104 mmol/min. Physical properties of A18 are shown in Table 2.

(Example 19) Modified Conjugated Diene-based Polymer (A19)

A modified conjugated diene-based polymer (A19) was obtained in the same manner as in Example 2 except that 2,2-bis(2-oxolanyl)propane as the polar compound was supplied under a condition of 0.136 mmol/min. Physical properties of A19 are shown in Table 2.

(Comparative Example 1) Modified Conjugated Diene-based Polymer (B1)

Two tank pressure vessels, each of which had an internal volume of 10 L and a ratio (L/D) of internal height (L) and diameter (D) of 4.0, had an inlet at a bottom and an outlet at a top, and was equipped with a stirrer and a temperature controlling jacket, were connected to each other as polymerization reactors.

1,3-Butadiene, styrene and n-hexane, from which a water content had been precedently removed, were mixed under conditions of 20.3 g/min, 5.9 g/min and 115.4 g/min, respectively to be continuously supplied to the bottom of the first reactor. In this supply, immediately before the mixed solution entered the first reactor, n-butyllithium to be used for residual impurity inactivation was continuously added under a condition of 0.104 mmol/min while being mixed with a static mixer. Besides, at the same time as the supply of 1,3-butadiene, styrene, n-hexane, and n-butyllithium, 2,2-bis(2-oxolanyl)propane used as the polar material and n-butyllithium used as the polymerization initiator were supplied under conditions of respectively 0.041 mmol/min and 0.208 mmol/min to the bottom of the first reactor in which reaction materials were vigorously stirred with the stirrer. In addition, additional 1,3-butadiene was added under a condition of 6.8 g/min through a supply port disposed at a height of 7/8 L from the bottom of the first reactor. It is noted that the internal temperature of the first reactor was kept at 77°C.

Solution of a conjugated diene-based polymer generated through a polymerization reaction caused in the first reactor was continuously taken out from the top of the first reactor to be continuously supplied to the bottom of the second reactor. It is noted that the internal temperature of the second reactor was kept at 82°C. A small amount of the conjugated diene-based polymer solution was taken out from the outlet of the second reactor, an antioxidant (BHT) was added thereto to obtain an amount of the antioxidant (BHT) of 0.2 g per 100 g of the conjugated diene-based polymer, and then the solvent was removed. Various average molecular weights (Physical Property 1) and a Mooney viscosity (Physical Property 2) at 110°C of the thus obtained conjugated diene-based polymer were measured. The physical properties are shown in Table 2.

Next, solution of a conjugated diene-based polymer generated in the second reactor was continuously taken out from the top of the second reactor to be continuously supplied to the bottom of the second reactor. To the polymer solution continuously flowing to a static mixer, tetrakis(3-trimethoxysilylpropyl)-1,3-propanediamine was continuously added as the coupling modifier under a condition of 0.030 mmol/min, and thus, the conjugated diene-based polymer was coupled. Here, a time until the addition of the coupling modifier to the polymer solution flowing out of the outlet of the second reactor was 4.8 min, the temperature of the polymer solution at which the coupling modifier was added was

68°C. Besides, a difference between the temperature of the polymer solution at the outlet of the second reactor and the temperature of the polymer solution in adding the coupling modifier was 2°C. A small amount of the modified conjugated diene-based polymer solution after the coupling was taken out, an antioxidant (BHT) was added thereto to obtain an amount of the antioxidant (BHT) of 0.2 g per 100 g of the polymer, and then the solvent was removed. The amount of bound styrene (Physical Property 5) and the content of 1,2-vinyl bond in bound butadiene (Physical Property 6) of the thus obtained modified conjugated diene-based polymer were measured. Measurement results are shown in Table 2.

Next, to the polymer solution flowing out of the static mixer, solution of an antioxidant (BHT) in n-hexane was added to obtain an amount of the antioxidant (BHT) of 0.2 g per 100 g of the polymer continuously under a condition of 0.055 g/min to complete the coupling reaction. Simultaneously with the antioxidant, an S-RAE oil (JOMO Process NC 140, manufactured by JX Nippon Oil & Energy Corporation) was continuously added as the rubber softener to obtain an amount of the S-RAE oil of 5.0 g per 100 g of the polymer, and the resultant was mixed with a static mixer. The solvent was removed by steam stripping, and thus, a modified conjugated diene-based polymer (B1) was obtained. Physical properties of the modified conjugated diene-based polymer (B1) are shown in Table 2. The structure of the modified conjugated diene-based polymer was identified by comparing polymers before and after the addition of the coupling modifier in the average molecular weights obtained by GPC measurement and the branch number obtained by viscosity detector-equipped GPC-light scattering measurement. Hereinafter, the structure of each sample was similarly identified.

(Comparative Example 2) Modified Conjugated Diene-based Polymer (B2)

A modified conjugated diene-based polymer (B2) was obtained in the same manner as in Comparative Example 1 except that 2,2-dimethoxy-1-(3-trimethoxysilylpropyl)-1-aza-2-silacyclopentane was used as the coupling modifier instead of tetrakis(3-trimethoxysilylpropyl)-1,3-propanediamine, and that the condition for supplying the coupling modifier was changed to 0.059 mmol/min. Physical properties of B2 are shown in Table 2.

(Comparative Example 3) Modified Conjugated Diene-based Polymer (B3)

A modified conjugated diene-based polymer (B3) was obtained in the same manner as in Example 5 except that 1,3-butadiene was supplied under a condition of 15.7 g/min, that styrene was supplied under a condition of 22.7 g/min, that n-hexane was supplied under a condition of 106 g/min, that 2,2-bis(2-oxolanyl)propane as the polar compound was supplied under a condition of 0.271 mmol/min, that n-butyllithium as the polymerization initiator was supplied under a condition of 0.177 mmol/min, that additional 1,3-butadiene was supplied under a condition of 6.7 g/min, that BS-1 as the branching agent was supplied under a condition of 0.019 mmol/min, that 2,2-dimethoxy-1-(3-trimethoxysilylpropyl)-1-aza-2-silacyclopentane as the coupling modifier was supplied under a condition of 0.054 mmol/min, that S-RAE oil as the rubber softener was supplied under such a condition as to obtain an amount of S-RAE oil of 25.0 g per 100 g of the polymer. Physical properties of B3 are shown in Table 2.

(Comparative Example 4) Modified Conjugated Diene-based Polymer (B4)

A modified conjugated diene-based polymer (B4) was obtained in the same manner as in Comparative Example 3 except that 1,3-butadiene was supplied under a condition of 19.5 g/min, that styrene was supplied under a condition of 12.7 g/min, that 2,2-bis(2-oxolanyl)propane as the polar compound was supplied under a condition of 0.451 mmol/min, that n-butyllithium as the polymerization initiator was supplied under a condition of 0.364 mmol/min, that additional 1,3-butadiene was supplied under a condition of 4.9 g/min, that BS-1 as the branching agent was supplied under a condition of 7.3 mmol/min, and that dimethylaminopropyltrimethoxysilane (shown as "e" in Table 2) was used as the coupling modifier instead of 2,2-dimethoxy-1-(3-trimethoxysilylpropyl)-1-aza-2-silacyclopentane, that the condition for supplying the coupling modifier was changed to 0.18 mmol/min, and that S-RAE oil as the rubber softener was supplied under such a condition as to obtain an amount of the S-RAE oil of 10.0 g per 100 g of the polymer. Physical properties of B4 are shown in Table 2.

(Comparative Example 5) Modified Conjugated Diene-based Polymer (B5)

A modified conjugated diene-based polymer (B5) was obtained in the same manner as in Example 19 except that 2,2-bis(2-oxolanyl)propane as the polar compound was supplied under a condition of 0.206 mmol/min. Physical properties of B5 are shown in Table 2.

Examples 1-6, 8-10, 14-16, and 18-19 are not according to the present invention.

[Table 1]

| Sample Number | | | - | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Conjugated Diene-based Polymer or Modified Conjugated Diene-based Polymer | | | - | A1 | A2 | A3 | A4 | A5 | A6 | A7 | A8 | A9 | A10 | A11 | A12 |
| Polymerization Conditions | Butadiene | | (g/min) | 16.6 | 19.2 | 20.9 | 20.3 | 20.3 | 20.3 | 20.3 | 20.3 | 20.3 | 20.3 | 15.9 | 15.9 |
| | Styrene | | (g/min) | 14.5 | 9.5 | 10.4 | 5.9 | 5.9 | 4.1 | 13.1 | 5.9 | 5.9 | 5.9 | 17.4 | 17.4 |
| | n-Hexane | | (g/min) | 113.2 | 115.4 | 108.2 | 115.4 | 115.4 | 115.4 | 115.4 | 115.4 | 115.4 | 115.4 | 115.4 | 115.4 |
| | n-Butyllithium for Impurity Treatment | | (mmol/min) | 0.114 | 0.094 | 0.062 | 0.104 | 0.104 | 0.104 | 0.104 | 0.104 | 0.104 | 0.104 | 0.104 | 0.104 |
| | n-Butyllithium of Polymerization Initiator | | (mmol/min) | 0.172 | 0.208 | 0.151 | 0.208 | 0.208 | 0.208 | 0.224 | 0.208 | 0.208 | 0.255 | 0.312 | 0.167 |
| | Piperidinolithium of Polymerization Initiator | | (mmol/min) | - | - | - | - | - | - | - | - | - | - | - | - |
| | Polar Compound | | (mmol/min) | 0.080 | 0.080 | 0.067 | 0.041 | 0.041 | 0.058 | 0.035 | 0.041 | 0.041 | 0.056 | 0.063 | 0.052 |
| | Additional Butadiene | | (g/min) | 5.5 | 6.4 | 6.9 | 6.8 | 6.8 | 6.8 | 6.8 | 6.8 | 6.8 | 6.8 | 5.3 | 5.3 |
| | Branching Agent | Used or not | - | Used | Used | Used | Used | Used | Used | Used | Used | Used | Used | Used | Used |
| | | Amount Added | (mmol/min) | 0.027 | 0.028 | 0.017 | 0.010 | 0.010 | 0.010 | 0.011 | 0.010 | 0.010 | 0.045 | 0.014 | 0.008 |
| | Coupling Agent | Type | - | a | a | b | a | c | a | a | d | a | - | a | a |
| | | Amount Added | (mmol/min) | 0.029 | 0.028 | 0.086 | 0.030 | 0.059 | 0.030 | 0.032 | 0.059 | 0.014 | - | 0.040 | 0.019 |
| Conjugated Diene-based Polymer or Modified Conjugated Diene-based Polymer | | | - | A1 | A2 | A3 | A4 | A5 | A6 | A7 | A8 | A9 | A10 | A11 | A12 |

(continued)

| Sample Number | | | - | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Physical Properties | Conjugated Diene-based Polymer | (Physical Property 1) Number Average Molecular Weight | (g/mol) | 260,000 | 270,000 | 357,000 | 220,000 | 220,000 | 225,000 | 206,000 | 220,000 | 220,000 | 307,000 | 166,000 | 340,000 |
| | | (Physical Property 1) Weight Average Molecular Weight | (g/mol) | 510,000 | 610,000 | 689,000 | 408,000 | 408,000 | 420,000 | 461,000 | 408,000 | 408,000 | 593,000 | 332,000 | 653,000 |
| | | (Physical Property 1) Mw/Mn | - | 1.96 | 2.26 | 1.93 | 1.85 | 1.85 | 1.87 | 2.24 | 1.85 | 1.85 | 1.93 | 2.00 | 1.92 |
| | | (Physical Property 2) Mooney Viscosity | - | 69 | 82 | 109 | 44 | 44 | 46 | 52 | 44 | 44 | 80 | 25 | 105 |
| | Modified Conjugated Diene-based Polymer or Conjugated Diene-based Polymer | (Physical Property 1) Number Average Molecular Weight | (g/mol) | 510,000 | 499,000 | 510,000 | 422,000 | 368,000 | 430,000 | 405,000 | 302,000 | 306,000 | - | 395,000 | 552,000 |
| | | (Physical Property 1) Weight Average Molecular Weight | (g/mol) | 1,000,000 | 944,000 | 978,000 | 817,000 | 680,000 | 847,000 | 834,000 | 576,000 | 581,000 | - | 787,000 | 1,070,000 |
| | | (Physical Property 1) Mw/Mn | - | 1.96 | 1.89 | 1.92 | 1.94 | 1.85 | 1.97 | 2.06 | 1.91 | 1.90 | - | 2.00 | 1.93 |
| | | (Physical Property 2) Mooney Viscosity | - | 110 | 105 | 106 | 115 | 127 | 118 | 120 | 90 | 97 | - | 144 | 120 |
| | | (Physical Property 3) Branch Number Bn | - | 16 | 12 | 17 | 12 | 9 | 13 | 12 | 7 | 12 | 9 | 10 | 8 |
| | | (Physical Property 4) Modification Ratio | (mass %) | 82 | 77 | 84 | 82 | 76 | 78 | 71 | 68 | 50 | - | 85 | 75 |
| | | (Physical Property 5) Amount of Bound Styrene | (mass %) | 25 | 16 | 16 | 10 | 10 | 7 | 20 | 10 | 10 | 10 | 30 | 30 |
| | | (Physical Property 6) Content of Vinyl Bond | (mol%) | 28 | 30 | 30 | 20 | 20 | 23 | 15 | 20 | 20 | 20 | 22 | 22 |
| | | (Physical Property 7) Absolute Molecular Weight | (g/mol) | 1,560,000 | 1,250,000 | 2,070,000 | 1,060,000 | 860,000 | 1,100,000 | 1,180,000 | 726,000 | 794,000 | 807,000 | 1,210,000 | 1,750,000 |
| | | (Physical Property 8) Glass Transition Temperature | (°C) | -45 | -60 | -60 | -75 | -75 | -75 | -70 | -75 | -75 | -75 | -45 | -45 |

[Table 2]

| Sample Number | | | - | Example 13 | Example 14 | Example 15 | Example 16 | Example 17 | Example 18 | Example 19 | Comparative Example 1 | Comparative Example 2 | Comparative Example 3 | Comparative Example 4 | Comparative Example 5 |
|---|---|---|---|---|---|---|---|---|---|---|---|---|---|---|---|
| Conjugated Diene-based Polymer or Modified Conjugated Diene-based Polymer | | | - | A13 | A14 | A15 | A16 | A17 | A18 | A19 | B1 | B2 | B3 | B4 | B5 |
| Polymerization Conditions | Butadiene | | (g/min) | 15.9 | 20.9 | 16.6 | 19.2 | 15.9 | 20.3 | 19.2 | 20.3 | 20.3 | 15.7 | 19.5 | 19.2 |
| | Styrene | | (g/min) | 19.8 | 10.4 | 14.5 | 9.5 | 19.8 | 5.9 | 9.5 | 5.9 | 5.9 | 22.7 | 12.7 | 9.5 |
| | n-Hexane | | (g/min) | 115.4 | 108.2 | 113.2 | 115.4 | 115.4 | 115.4 | 115.4 | 115.4 | 115.4 | 106.0 | 106.0 | 115.4 |
| | n-Butyllithium for Impurity Treatment | | (mmol/min) | 0.104 | 0.104 | 0.114 | 0.094 | 0.104 | 0.104 | 0.094 | 0.104 | 0.104 | 0.104 | 0.104 | 0.094 |
| | n-Butyllithium of Polymerization Initiator | | (mmol/min) | 0.172 | 0.177 | 0.172 | 0.208 | 0.172 | 0.062 | 0.208 | 0.208 | 0.208 | 0.177 | 0.364 | 0.208 |
| | Piperidinolithium of Polymerization Initiator | | (mmol/min) | - | - | - | - | - | 0.187 | - | - | - | - | - | - |
| | Polar Compound | | (mmol/min) | 0.081 | 0.086 | 0.080 | 0.080 | 0.081 | 0.041 | 0.136 | 0.041 | 0.041 | 0.271 | 0.451 | 0.206 |
| | Additional Butadiene | | (g/min) | 5.3 | 6.9 | 5.5 | 6.4 | 5.3 | 6.8 | 6.4 | 6.8 | 6.8 | 6.7 | 4.9 | 6.4 |
| | Branching Agent | Used or not | - | Used | Used | Used | Used | Used | Used | Used | Not used | Not used | Used | Used | Used |
| | | Amount Added | (mmol/min) | 0.009 | 0.019 | 0.027 | 0.028 | 0.015 | 0.010 | 0.028 | - | - | 0.019 | 7.3 | 0.028 |
| | Coupling Agent | Type | - | a | d | a | a | a | c | a | a | c | c | e | a |
| | | Amount Added | (mmol/min) | 0.019 | 0.118 | 0.020 | 0.019 | 0.013 | 0.059 | 0.028 | 0.030 | 0.059 | 0.054 | 0.18 | 0.028 |
| Conjugated Diene-based Polymer or Modified Conjugated Diene-based Polymer | | | - | A13 | A14 | A15 | A16 | A17 | A18 | A19 | B1 | B2 | B3 | B4 | B5 |

(continued)

| Sample Number | | | - | Example 13 | Example 14 | Example 15 | Example 16 | Example 17 | Example 18 | Example 19 | Comparative Example 1 | Comparative Example 2 | Comparative Example 3 | Comparative Example 4 | Comparative Example 5 |
|---|---|---|---|---|---|---|---|---|---|---|---|---|---|---|---|
| Physical Properties | Conjugated Diene-based Polymer | (Physical Property 1) Number Average Molecular Weight | (g/mol) | 342,000 | 326,000 | 260,000 | 270,000 | 342,000 | 217,000 | 270,000 | 178,000 | 178,000 | 318,000 | 167000 | 266,000 |
| | | (Physical Property 1) Weight Average Molecular Weight | (g/mol) | 646,000 | 632,000 | 510,000 | 610,000 | 646,000 | 416,000 | 540,000 | 340,000 | 340,000 | 673,000 | 309000 | 527,000 |
| | | (Physical Property 1) Mw/Mn | - | 1.89 | 1.94 | 1.96 | 2.26 | 1.89 | 1.92 | 2.02 | 1.91 | 1.91 | 2.12 | 1.85 | 1.98 |
| | | (Physical Property 2) Mooney Viscosity | - | 103 | 95 | 69 | 82 | 103 | 44 | 65 | 46 | 46 | 115.0 | 40 | 63 |
| | Modified Conjugated Diene-based Polymer or Conjugated Diene-based Polymer | (Physical Property 1) Number Average Molecular Weight | (g/mol) | 524,000 | 434,000 | 405,000 | 400,000 | 420,000 | 285,000 | 485,000 | 283,000 | 200,300 | 522,000 | 242000 | 483,000 |
| | | (Physical Property 1) Weight Average Molecular Weight | (g/mol) | 1,030,000 | 890,000 | 798,000 | 780,000 | 832,000 | 590,000 | 921,000 | 543,000 | 391,000 | 976,000 | 448000 | 932,000 |
| | | (Physical Property 1) Mw/Mn | - | 1.97 | 2.05 | 1.97 | 1.95 | 1.98 | 2.07 | 1.90 | 1.92 | 1.95 | 1.87 | 1.85 | 1.93 |
| | | (Physical Property 2) Mooney Viscosity | - | 117 | 115 | 90 | 93 | 93 | 80 | 100 | 45 | 63 | 92 | 50 | 101 |
| | | (Physical Property 3) Branch Number Bn | - | 10 | 12 | 10 | 11 | 10 | 8 | 12 | 6 | 2 | 19 | 2 | 12 |
| | | (Physical Property 4) Modification Ratio | (mass %) | 78 | 71 | 63 | 64 | 63 | 82 | 78 | 59 | 57 | 80 | 88 | 77 |
| | | (Physical Property 5) Amount of Bound Styrene | (mass %) | 32 | 15 | 25 | 15 | 32 | 10 | 15 | 10 | 10 | 34 | 23 | 15 |
| | | (Physical Property 6) Content of Vinyl Bond | (mol%) | 25 | 30 | 28 | 30 | 25 | 22 | 35 | 20 | 20 | 58 | 58 | 43 |
| | | (Physical Property 7) Absolute Molecular Weight | (g/mol) | 1,780,000 | 1,040,000 | 1,020,000 | 1,020,000 | 1,040,000 | 730,000 | 1,150,000 | 702,000 | 510,000 | 1,540,000 | 374000 | 1,180,000 |
| | | (Physical Property 8) Glass Transition Temperature | (°C) | -38 | -60 | -45 | -60 | -38 | -75 | -52 | -75 | -75 | -23 | -30 | -48 |

(Evaluation of Rubber Compositions)

The modified conjugated diene-based polymers or conjugated diene-based polymer A1 to A19 and B1 to B5 shown in Tables 1 to 2 were respectively used as raw materials to obtain rubber compositions in accordance with the following composition:

Modified conjugated diene-based polymer or conjugated diene-based polymer (any one of A1 to A19 and B1 to B5): 100 parts by mass (excluding oil)
Silica (trade name "Ultrasil 7000GR", manufactured by Evonik Degussa, nitrogen adsorption specific surface area: 170 $m^2/g$): 75.0 parts by mass
Carbon black (trade name "Seast KH (N339)", manufactured by Tokai Carbon Co., Ltd.): 5.0 parts by mass
Silane coupling agent: (trade name "Si75", manufactured by Evonik Degussa, bis(triethoxysilylpropyl)disulfide): 6.0 parts by mass
S-RAE oil (trade name "Process NC140", manufactured by JX Nippon Oil & Energy Corporation): 32.0 parts by mass
Zinc oxide: 2.5 parts by mass
Stearic acid: 2.0 parts by mass
Anti-aging agent (N-(1,3-dimethylbutyl)-N'-phenyl-p-phenylenediamine): 2.0 parts by mass
Sulfur: 1.7 parts by mass
Vulcanization accelerator 1 (N-cyclohexyl-2-benzothiazylsulfinamide): 1.7 parts by mass
Vulcanization accelerator 2 (diphenylguanidine): 2.0 parts by mass

Specifically, the above-described materials were kneaded by the following method to obtain a rubber composition. A closed kneader (having an internal volume of 0.3 L) equipped with a temperature controller was used to knead, as a first stage of kneading, the modified conjugated diene-based polymer or conjugated diene-based polymer (any one of A1 to A19 and B1 to B5), the fillers (silica and carbon black), the silane coupling agent, the S-RAE oil, zinc oxide and stearic acid under conditions of a filling ratio of 65% and a rotor rotation speed of 30 to 50 rpm. Here, the temperature of the closed kneader was controlled to obtain each rubber composition (compound) at a discharging temperature of 155 to 160°C.

Next, after cooling the compound obtained as described above to room temperature, as a second stage of the kneading, the anti-aging agent was added thereto, and the resultant was kneaded again under the same conditions as those for the first stage of the kneading to improve dispersibility of the silica. Also in this case, the discharging temperature for the compound was adjusted to 155 to 160°C by the temperature control of the kneader. After cooling, as a third stage of the kneading, sulfur and the vulcanization accelerators 1 and 2 were added thereto, and the resultant was kneaded by an open roll set to 70°C. Thereafter, the resultant was molded and vulcanized at 160°C for 20 minutes by a vulcanizing press. The rubber compositions before the vulcanization, and the rubber compositions after the vulcanization were evaluated. Specifically, the evaluations were performed as described below. Results are shown in Tables 3 to 6.

(Evaluation 1) Clamping Property of Discharged Substance

Regarding each of the modified conjugated diene-based polymers or conjugated diene-based polymer before vulcanization produced by the methods described in Examples and Comparative Examples, a clump (shape) obtained immediately after being discharged from the pressurizing kneader (immediately after being discharged after completing the kneading with the pressurizing kneader in the first stage of the kneading) was visually observed to perform evaluation based on the following criteria by panelists each on a scale of 1 to 5. A clumping property is an index of processability of a vulcanizate.

V: A sheet end portion was smooth by 50% or less, and processability was very poor.
IV: A sheet end portion was smooth by more than 50% and 60% or less, and processability was poor.
III: A sheet end portion was smooth by more than 60% and 80% or less, and processability was good.
II: A sheet end portion was smooth by more than 80% and 90% or less, and processability was excellent.
I: A sheet end portion was smooth over 90%, and processability was very excellent.

(Evaluation 2) Viscoelastisity Parameter (Fuel Economy/Wet Grip Performance)

A viscoelasticity testing machine "ARES" manufactured by Rheometric Scientific, Inc. was used to measure a viscoelasticity parameter in a torsion mode. Each measurement value was shown as an index obtained by assuming that a result obtained in the rubber composition of Example 9 was 100. A tan $\delta$ measured at 50°C at a frequency of 10 Hz and strain of 3% was used as an index of a low hysteresis loss property, namely, fuel efficiency. A smaller index

indicates better fuel efficiency. Besides, a tan δ measured at 0°C at a frequency of 10 Hz and strain of 1% was used as an index of wet grip performance. A larger index indicates better wet grip performance.

(Evaluation 3) Tensile Strength and Tensile Elongation

Tensile strength and tensile elongation were measured in accordance with a tensile test method according to JIS K6251. Each measured value was shown as an index obtained assuming that a result of Example 9 was 100. A larger index indicates better tensile strength and tensile elongation.

(Evaluation 4) Abrasion Resistance

An Acron abrasion tester (manufactured by Yasuda Seiki Seisakusho, Ltd.) was used to measure an abrasion amount through 1,000 rotations at a load of 44.4 N in accordance with JIS K6264-2. Each measured value was shown as an index obtained assuming that a result of Example 9 was 100. A larger index indicates better abrasion resistance, and one having such a value over 90 was evaluated as excellent in abrasion resistance.

(Evaluation 5) Change over Time (Mooney Viscosity Increase after One Month)

Each of the modified conjugated diene-based polymers or conjugated diene-based polymer was stored at normal temperature under normal pressure for 1 month, and a Mooney viscosity after the storage was measured to calculate a difference from a Mooney viscosity measured immediately after the polymerization. In the tables, this parameter is shown as "δ Mooney Viscosity". A smaller value indicates that change over time is small, and quality stability is excellent.

[Table 3]

| Sample Number | | Example 1 | Example 2 | Example 3 | Example 4 | Example 5 | Example 6 |
|---|---|---|---|---|---|---|---|
| Conjugated Diene-based Polymer or Modified Conjugated Diene-based Polymer | | A1 | A2 | A3 | A4 | A5 | A6 |
| Processability | (Evaluation 1) Clamping Property of Discharged Substance | I | II | II | II | II | II |
| Physical Properties | (Evaluation 2) Viscosity Parameter (Fuel Economy) | 95 | 97 | 98 | 85 | 95 | 91 |
| | (Evaluation 2) Viscosity Parameter (Wet Grip Performance) | 134 | 114 | 114 | 100 | 100 | 100 |
| | (Evaluation 3) Tensile Strength | 133 | 110 | 113 | 121 | 105 | 98 |
| | (Evaluation 3) Tensile Elongation | 117 | 95 | 92 | 127 | 128 | 109 |
| | (Evaluation 4) Abrasion Resistance | 108 | 104 | 123 | 156 | 134 | 140 |
| | (Evaluation 5) δ Mooney Viscosity | 1 | 1 | 3 | 2 | 3 | 2 |

[Table 4]

| Sample Number | | Example 7 | Example 8 | Example 9 | Example 10 | Example 11 | Example 12 |
|---|---|---|---|---|---|---|---|
| Conjugated Diene-based Polymer or Modified Conjugated Diene-based Polymer | | A7 | A8 | A9 | A10 | A11 | A12 |
| Processability | (Evaluation 1) Clamping Property of Discharged Substance | II | II | II | II | I | I |
| Physical Properties | (Evaluation 2) Viscosity Parameter (Fuel Economy) | 87 | 96 | 100 | 111 | 92 | 97 |
| | (Evaluation 2) Viscosity Parameter (Wet Grip Performance) | 106 | 100 | 100 | 100 | 152 | 152 |
| | (Evaluation 3) Tensile Strength | 103 | 103 | 100 | 85 | 140 | 140 |
| | (Evaluation 3) Tensile Elongation | 130 | 123 | 100 | 88 | 128 | 120 |
| | (Evaluation 4) Abrasion Resistance | 161 | 104 | 100 | 97 | 104 | 110 |
| | (Evaluation 5) δ Mooney Viscosity | 2 | 2 | 5 | 0 | 5 | 3 |

[Table 5]

| Sample Number | | Example 13 | Example 14 | Example 15 | Example 16 | Example 17 | Example 18 | Example 19 |
|---|---|---|---|---|---|---|---|---|
| Conjugated Diene-based Polymer or Modified Conjugated Diene-based Polymer | | A13 | A14 | A15 | A16 | A17 | A18 | A19 |
| Processability | (Evaluation 1) Clamping Property of Discharged Substance | I | II | II | II | I | III | II |

(continued)

| Sample Number | | Example 13 | Example 14 | Example 15 | Example 16 | Example 17 | Example 18 | Example 19 |
|---|---|---|---|---|---|---|---|---|
| Conjugated Diene-based Polymer or Modified Conjugated Diene-based Polymer | | A13 | A14 | A15 | A16 | A17 | A18 | A19 |
| Physical Properties | (Evaluation 2) Viscosity Parameter (Fuel Economy) | 99 | 100 | 102 | 104 | 107 | 96 | 99 |
| | (Evaluation 2) Viscosity Parameter (Wet Grip Performance) | 240 | 114 | 134 | 114 | 240 | 100 | 120 |
| | (Evaluation 3) Tensile Strength | 143 | 108 | 130 | 115 | 138 | 108 | 105 |
| | (Evaluation 3) Tensile Elongation | 127 | 103 | 123 | 100 | 130 | 128 | 98 |
| | (Evaluation 4) Abrasion Resistance | 102 | 97 | 103 | 99 | 94 | 100 | 99 |
| | (Evaluation 5) δ Mooney Viscosity | 3 | 6 | 1 | 1 | 1 | 6 | 1 |

[Table 6]

| Sample Number | | Comparative Example 1 | Comparative Example 2 | Comparative Example 3 | Comparative Example 4 | Comparative Example 5 |
|---|---|---|---|---|---|---|
| Conjugated Diene-based Polymer or Modified Conjugated Diene-based Polymer | | B1 | B2 | B3 | B4 | B5 |
| Processability | (Evaluation 1) Clamping Property of Discharged Substance | IV | IV | II | V | II |

(continued)

| Sample Number | | Comparative Example 1 | Comparative Example 2 | Comparative Example 3 | Comparative Example 4 | Comparative Example 5 |
|---|---|---|---|---|---|---|
| Conjugated Diene-based Polymer or Modified Conjugated Diene-based Polymer | | B1 | B2 | B3 | B4 | B5 |
| Physical Properties | (Evaluation 2) Viscosity Parameter (Fuel Economy) | 100 | 100 | 129 | 117 | 106 |
| | (Evaluation 2) Viscosity Parameter (Wet Grip Performance) | 100 | 100 | 660 | 460 | 145 |
| | (Evaluation 3) Tensile Strength | 95 | 103 | 120 | 105 | 106 |
| | (Evaluation 3) Tensile Elongation | 112 | 92 | 95 | 100 | 100 |
| | (Evaluation 4) Abrasion Resistance | 97 | 95 | 82 | 78 | 90 |
| | (Evaluation 5) δ Mooney Viscosity | 7 | 9 | 3 | 6 | 1 |

As shown in Tables 3 to 6, it was confirmed that the modified conjugated diene-based polymers or conjugated diene-based polymer of Examples 1 to 19 are excellent in a low hysteresis loss property of a vulcanizate obtained therefrom, and excellent also in abrasion resistance as compared with the modified conjugated diene-based polymers of Comparative Examples 1 to 5. Besides, it was also confirmed that they are excellent in the clumping property in vulcanization, and exhibit good processability.

The modified conjugated diene-based polymers A1, A2, A5, A15, A18, B2 or B4 shown in Tables 1 and 2 were respectively used as raw materials to obtain rubber compositions in accordance with the following composition instead of the above-described composition. Each rubber composition was obtained in the same manner as described above except that butadiene rubber was added together with the modified conjugated diene-based polymer at the first stage of the kneading. Thereafter, a rubber composition before vulcanization and a rubber composition after the vulcanization were evaluated in the same manner as described above. Results are shown in Table 7.

Modified conjugated diene-based polymer (A1, A2, A5, A15, A18, B2 or B4): 70 parts by mass (excluding oil)

Butadiene rubber (trade name "BR150", manufactured by Ube Industries, Ltd.): 30 parts by mass

Silica (trade name "Ultrasil 7000GR", manufactured by Evonik Degussa, nitrogen adsorption specific surface area: 170 $m^2/g$): 75.0 parts by mass

Carbon black (trade name "Seast KH (N339)", manufactured by Tokai Carbon Co., Ltd.): 5.0 parts by mass

Silane coupling agent: (trade name "Si75", manufactured by Evonik Degussa, bis(triethoxysilylpropyl)disulfide): 6.0 parts by mass

S-RAE oil (trade name "Process NC140", manufactured by JX Nippon Oil & Energy Corporation): 32.0 parts by mass

Zinc oxide: 2.5 parts by mass

Stearic acid: 2.0 part by mass

Anti-aging agent (N-(1,3-dimethylbutyl)-N'-phenyl-p-phenylenediamine): 2.0 parts by mass

Sulfur: 1.7 parts by mass

Vulcanization accelerator 1 (N-cyclohexyl-2-benzothiazylsulfinamide): 1.7 parts by mass

Vulcanization accelerator 2 (diphenylguanidine): 2.0 parts by mass

[Table 7]

| Sample Number | | Example 20 | Example 21 | Example 22 | Example 23 | Example 24 | Comparative Example 6 | Comparative Example 7 |
|---|---|---|---|---|---|---|---|---|
| Modified Conjugated Diene-based Polymer | | A1 | A2 | A5 | A15 | A18 | B2 | B4 |
| Processability | (Evaluation 1) Clamping Property of Discharged Substance | I | II | II | II | III | IV | V |
| Physical Properties | (Evaluation 2) Viscosity Parameter (Fuel Economy) | 92 | 94 | 92 | 101 | 97 | 100 | 114 |
| | (Evaluation 2) Viscosity Parameter (Wet Grip Performance) | 121 | 105 | 91 | 121 | 91 | 91 | 410 |
| | (Evaluation 3) Tensile Strength | 136 | 112 | 106 | 125 | 100 | 94 | 97 |
| | (Evaluation 3) Tensile Elongation | 120 | 97 | 127 | 118 | 112 | 110 | 105 |
| | (Evaluation 4) Abrasion Resistance | 103 | 100 | 130 | 100 | 97 | 93 | 83 |

As shown in Table 7, it was confirmed that the modified conjugated diene-based polymer rubber compositions of Examples 20 to 24 are excellent in a low hysteresis loss property of a vulcanizate obtained therefrom, and excellent also in abrasion resistance as compared with the modified conjugated diene-based polymer rubber compositions of Comparative Examples 6 and 7. Besides, it was also confirmed that they are excellent in the clumping property in vulcanization, and exhibit good processability. Based on this result, it was revealed that even when a ratio of a conjugated diene-based polymer of the present embodiment is small in an entire rubber component of a rubber composition, processability of the rubber composition, and a low hysteresis loss property and abrasion resistance of a vulcanizate obtained therefrom can be improved.

Industrial Applicability

A conjugated diene-based polymer, a method for producing a conjugated diene-based polymer, a conjugated diene-based polymer composition, and a rubber composition of the present invention are excellent in processability in vulcanization, and excellent in abrasion resistance and a low hysteresis loss property of a vulcanizate obtained therefrom, and therefore, are suitably used and industrially applicable in applications such as a tire, resin modification, interior and exterior of a vehicle, an anti-vibration rubber, and shoes.

## Claims

1. A conjugated diene-based polymer, having:

    a branch number measured by viscosity detector-equipped GPC-light scattering measurement of 7 or more,
    an amount of bound aromatic vinyl, measured as described in "(Physical Property 5) Amount of Bound Aromatic Vinyl" in the description, of 1% by mass or more and 32% by mass or less, and
    a content of vinyl bond in bound conjugated diene, measured as described in "(Physical Property 6) Content of Vinyl Bond in Bound Conjugated Diene" in the description, of 11% by mol or more and 35% by mol or less,
    wherein a value (expressed in % by mass) of the amount of bound aromatic vinyl is larger than a value (expressed in % by mol) of the content of vinyl bond in bound conjugated diene.

2. The conjugated diene-based polymer according to claim 1,

    wherein the amount of bound aromatic vinyl is 1% by mass or more and 30% by mass or less, and
    the content of vinyl bond in bound conjugated diene is 11% by mol or more and 30% by mol or less.

3. The conjugated diene-based polymer according to claim 1 or 2, having a nitrogen atom.

4. The conjugated diene-based polymer according to any one of claims 1 to 3, having a silicon atom.

5. The conjugated diene-based polymer according to any one of claims 1 to 4, having a modifying group.

6. The conjugated diene-based polymer according to claim 5,

    wherein the modifying group has a nitrogen atom, and
    a modification ratio of the conjugated diene-based polymer is 70% by mass or more.

7. The conjugated diene-based polymer according to any one of claims 1 to 6, having a star polymer structure having 3 or more branches,
    wherein at least one branched chain of the star polymer structure has at least one portion derived from a vinyl-based monomer containing an alkoxysilyl group or a halosilyl group, and is further branched in the portion.

8. The conjugated diene-based polymer according to claim 7,

    wherein at least one of the portions each derived from a vinyl-based monomer containing an alkoxysilyl group or a halosilyl group is a portion derived from a compound represented by the following formula (1) or (2):

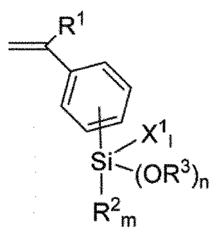

(1)

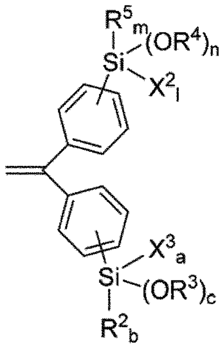

(2)

wherein in the formula (1), $R^1$ represents a hydrogen atom, an alkyl group having 1 to 20 carbon atoms, or an aryl group having 6 to 20 carbon atoms, and may have a branch structure in a part thereof;
$R^2$ and $R^3$ each independently represent an alkyl group having 1 to 20 carbon atoms, or an aryl group having 6 to 20 carbon atoms, and may have a branch structure in a part thereof;
$X^1$ each independently represents a halogen atom;
m represents an integer of 0 to 2, n represents an integer of 0 to 3, l represents an integer of 0 to 3; and a sum of m, n, and l is 3; and
in the formula (2), $R^2$, $R^3$, $R^4$ and $R^5$ each independently represent an alkyl group having 1 to 20 carbon atoms, or an aryl group having 6 to 20 carbon atoms, and may have a branch structure in a part thereof;
$X^2$ and $X^3$ each independently represent a halogen atom;
m represents an integer of 0 to 2, n represents an integer of 0 to 3, l represents an integer of 0 to 3;
a sum of m, n, and l is 3;
a represents an integer of 0 to 3, b represents an integer of 0 to 2, c represents an integer of 0 to 3; and
a sum of a, b, and c is 3.

**9.** The conjugated diene-based polymer according to claim 8, wherein at least one of the portions each derived from a vinyl-based monomer containing an alkoxysilyl group or a halosilyl group is a portion derived from a compound represented by the formula (1) wherein $R^1$ is a hydrogen atom, and m is 0.

**10.** The conjugated diene-based polymer according to claim 8, wherein at least one of the portions each derived from a vinyl-based monomer containing an alkoxysilyl group or a halosilyl group is a portion derived from a compound represented by the formula (2) wherein m is 0, and b is 0.

**11.** The conjugated diene-based polymer according to claim 8, wherein at least one of the portions each derived from a vinyl-based monomer containing an alkoxysilyl group or a halosilyl group is a portion derived from a compound represented by the formula (1) wherein $R^1$ is a hydrogen atom, m is 0, l is 0, and n is 3.

**12.** The conjugated diene-based polymer according to claim 8, wherein at least one of the portions each derived from a vinyl-based monomer containing an alkoxysilyl group or a halosilyl group is a portion derived from a compound represented by the formula (2) wherein m is 0, l is 0, n is 3, a is 0, b is 0, and c is 3.

**13.** A method for producing the conjugated diene-based polymer according to any one of claims 1 to 12, comprising: a step of obtaining a conjugated diene-based polymer having a branch structure by adding a branching agent during polymerization of at least a conjugated diene compound and an aromatic vinyl compound with an organic lithium compound used as a polymerization initiator.

**14.** The method for producing the conjugated diene-based polymer according to claim 13, further comprising a step of obtaining a modified conjugated diene-based polymer by reacting a coupling modifier with the conjugated diene-based polymer having a branch structure.

**15.** A conjugated diene-based polymer composition, comprising 100 parts by mass of the conjugated diene-based polymer according to any one of claims 1 to 12, and 1.0 part by mass or more and 60 parts by mass or less of a rubber softener.

**16.** A rubber composition, comprising a rubber component, and 5.0 parts by mass or more and 150 parts by mass or

less of a filler with respect to 100 parts by mass of the rubber component,
wherein the rubber component comprises 10 parts by mass or more of the conjugated diene-based polymer according to any one of claims 1 to 12 or the conjugated diene-based polymer composition according to claim 15 with respect to 100 parts by mass of a total amount of the rubber component.

## Patentansprüche

1. Polymer auf Basis von konjugiertem Dien, welches:

   eine Zweigzahl, gemessen durch eine mit einem Viskositätsdetektor ausgestattete GPC-Lichtstreuungsmessung, von 7 oder mehr,
   eine Menge an gebundenem aromatischem Vinyl, gemessen wie in "(Physikalische Eigenschaft 5) Menge an gebundenem aromatischem Vinyl" in der Beschreibung beschrieben, von 1 Massen-% oder mehr und 32 Massen-% oder weniger, und
   einen Gehalt an Vinylbindung in gebundenem konjugiertem Dien, gemessen wie in "(Physikalische Eigenschaft 6) Gehalt an Vinylbindung in gebundenem konjugiertem Dien" in der Beschreibung beschrieben, von 11 Mol-% oder mehr und 35 Mol-% oder weniger, aufweist,
   wobei ein Wert (ausgedrückt in Massen-%) der Menge an gebundenem aromatischem Vinyl größer ist als der Wert (ausgedrückt in Mol-%) des Gehalts an Vinylbindung in gebundenem konjugiertem Dien.

2. Polymer auf Basis von konjugiertem Dien nach Anspruch 1,

   wobei die Menge an gebundenem aromatischem Vinyl 1 Massen-% oder mehr und 30 Massen-% oder weniger beträgt und
   der Gehalt an Vinylbindung in gebundenem konjugierten Dien 11 Mol-% oder mehr und 30 Mol-% oder weniger beträgt.

3. Polymer auf Basis von konjugiertem Dien nach Anspruch 1 oder 2, welches ein Stickstoffatom aufweist.

4. Polymer auf Basis von konjugiertem Dien nach einem der Ansprüche 1 bis 3, welches ein Siliciumatom aufweist.

5. Polymer auf Basis von konjugiertem Dien nach einem der Ansprüche 1 bis 4, welches eine modifizierende Gruppe aufweist.

6. Polymer auf Basis von konjugiertem Dien nach Anspruch 5,

   wobei die modifizierende Gruppe ein Stickstoffatom aufweist, und
   der Modifikationsgrad des Polymers auf Basis von konjugiertem Dien 70 Massen-% oder mehr beträgt.

7. Polymer auf Basis von konjugiertem Dien nach einem der Ansprüche 1 bis 6, das eine Sternpolymerstruktur mit 3 oder mehr Zweigen aufweist,
   wobei mindestens eine verzweigte Kette der Sternpolymerstruktur mindestens einen Abschnitt aufweist, der von einem Monomer auf Vinylbasis abgeleitet ist, das eine Alkoxysilylgruppe oder eine Halogensilylgruppe enthält, und in dem Abschnitt weiter verzweigt ist.

8. Polymer auf Basis von konjugiertem Dien nach Anspruch 7,

   wobei mindestens einer der Abschnitte, die jeweils von einem Monomer auf Vinylbasis, enthaltend eine Alkoxysilylgruppe oder eine Halogensilylgruppe, abgeleitet ist/sind, ein Abschnitt ist, der von einer durch die folgende Formel (1) oder (2) dargestellten Verbindung abgeleitet ist:

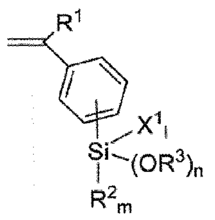

(1)

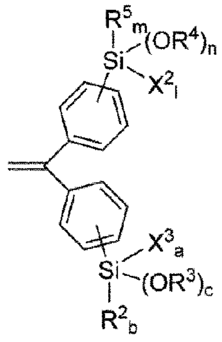

(2)

wobei in der Formel (1) $R^1$ ein Wasserstoffatom, eine Alkylgruppe mit 1 bis 20 Kohlenstoffatomen oder eine Arylgruppe mit 6 bis 20 Kohlenstoffatomen darstellt und in einem Teil davon eine Verzweigungsstruktur aufweisen kann;
$R^2$ und $R^3$ jeweils unabhängig eine Alkylgruppe mit 1 bis 20 Kohlenstoffatomen oder eine Arylgruppe mit 6 bis 20 Kohlenstoffatomen darstellen und in einem Teil davon eine Verzweigungsstruktur aufweisen können;
$X^1$ jeweils unabhängig ein Halogenatom darstellt;
m eine ganze Zahl von 0 bis 2 dar darstellt, n eine ganze Zahl von 0 bis 3 darstellt, l stellt eine ganze Zahl von 0 bis 3 dar; und
die Summe von m, n und l 3 ist; und
in der Formel (2) $R^2$, $R^3$, $R^4$ und $R^5$ jeweils unabhängig eine Alkylgruppe mit 1 bis 20 Kohlenstoffatomen oder eine Arylgruppe mit 6 bis 20 Kohlenstoffatomen darstellen und in einem Teil davon eine Verzweigungsstruktur aufweisen können;
$X^2$ und $X^3$ jeweils unabhängig ein Halogenatom darstellen;
m eine ganze Zahl von 0 bis 2 darstellt, n eine ganze Zahl von 0 bis 3 darstellt, l eine ganze Zahl von 0 bis 3 darstellt;
die Summe von m, n und l 3 ist;
a eine ganze Zahl von 0 bis 3 darstellt, b eine ganze Zahl von 0 bis 2 darstellt, c eine ganze Zahl von 0 bis 3 darstellt; und
die Summe von a, b und c 3 ist.

**9.** Polymer auf Basis von konjugiertem Dien nach Anspruch 8, wobei mindestens einer der Abschnitte, die jeweils von einem Monomer auf Vinylbasis abgeleitet sind, das eine Alkoxysilylgruppe oder eine Halogensilylgruppe enthält, ein Abschnitt ist, der von einer Verbindung der Formel (1) abgeleitet ist, wobei $R^1$ ein Wasserstoffatom ist und m 0 ist.

**10.** Polymer auf Basis von konjugiertem Dien nach Anspruch 8, wobei mindestens einer der Abschnitte, die jeweils von einem Monomer auf Vinylbasis abgeleitet sind, das eine Alkoxysilylgruppe oder eine Halogensilylgruppe enthält, ein Abschnitt ist, der von einer Verbindung abgeleitet ist, die durch die Formel (2) dargestellt wird, wobei m 0 ist und b 0 ist.

**11.** Polymer auf Basis von konjugiertem Dien nach Anspruch 8, wobei mindestens einer der Abschnitte, die jeweils von einem Monomer auf Vinylbasis abgeleitet sind, das eine Alkoxysilylgruppe oder eine Halogensilylgruppe enthält, ein Abschnitt ist, der von einer Verbindung abgeleitet ist, die durch die Formel (1) dargestellt wird, wobei $R^1$ ein Wasserstoffatom ist, m 0 ist, l 0 ist und n 3 ist.

**12.** Polymer auf Basis von konjugiertem Dien nach Anspruch 8, wobei mindestens einer der Abschnitte, die jeweils von einem Monomer auf Vinylbasis abgeleitet sind, das eine Alkoxysilylgruppe oder eine Halogensilylgruppe enthält, ein Abschnitt ist, der von einer Verbindung abgeleitet ist, die durch die Formel (2) dargestellt wird, worbei m 0 ist, l

0 ist, n 3 ist, a 0 ist, b 0 ist und c 3 ist.

**13.** Verfahren zur Herstellung des Polymers auf Basis von konjugiertem Dien nach einem der Ansprüche 1 bis 12, umfassend:
einen Schritt des Erhaltens eines Polymers auf Basis von konjugiertem Dien mit einer Zweigstruktur durch Zugabe eines Verzweigungsmittels während der Polymerisation von mindestens einer konjugierten Dienverbindung und einer aromatischen Vinylverbindung mit einer organischen Lithiumverbindung, die als Polymerisationsinitiator verwendet wird.

**14.** Verfahren zur Herstellung des Polymers auf Basis von konjugiertem Dien nach Anspruch 13, welches weiterhin einen Schritt des Erhaltens eines modifizierten Polymers auf Basis von konjugiertem Dien durch Umsetzen eines kuppelnden Mofifizierungsmittels mit dem eine Zweigstruktur aufweisenden Polymer auf Basis von konjugiertem Dien umfasst.

**15.** Zusammensetzung von Polymer auf Basis von konjugiertem Dien, umfassend 100 Massenteile des Polymers auf Basis von konjugiertem Dien nach einem der Ansprüche 1 bis 12 und 1,0 Massenteile oder mehr und 60 Massenteile oder weniger eines Kautschukweichmachers.

**16.** Kautschukzusammensetzung, umfassend eine Kautschukkomponente und 5,0 Massenteile oder mehr und 150 Massenteile oder weniger eines Füllstoffs, bezogen auf 100 Massenteile der Kautschukkomponente,
wobei die Kautschukkomponente 10 Massenteile oder mehr des Polymers auf Basis von konjugiertem Dien nach einem der Ansprüche 1 bis 12 oder der Zusammensetzung von Polymer auf Basis von konjugiertem Dien nach Anspruch 15, bezogen auf 100 Massenteile der Gesamtmenge der Kautschukkomponente, umfasst.

## Revendications

**1.** Polymère à base de diène conjugué, présentant :

un nombre de ramifications mesuré par mesure de diffusion de lumière par chromatographie par perméation de gel équipée d'un détecteur de viscosité de 7 ou plus,
une quantité de vinyle aromatique lié, mesurée tel que décrit dans « (Propriété physique 5) Quantité de vinyle aromatique lié » dans la description, de 1 % en masse ou plus et de 32 % en masse ou moins, et
une teneur en liaison vinyle dans le diène conjugué lié, mesurée tel que décrit dans « (Propriété physique 6) Teneur en liaison vinyle dans le diène conjugué lié » dans la description, de 11 % en moles ou plus et de 35 % en moles ou moins,
dans lequel une valeur (exprimée en % en masse) de la quantité de vinyle aromatique lié est supérieure à une valeur (exprimée en % en moles) de la teneur en liaison vinyle dans le diène conjugué lié.

**2.** Polymère à base de diène conjugué selon la revendication 1,

dans lequel la quantité de vinyle aromatique lié est de 1 % en masse ou plus et de 30 % en masse ou moins, et la teneur en liaison vinyle dans le diène conjugué lié est de 11 % en moles ou plus et de 30 % en moles ou moins.

**3.** Polymère à base de diène conjugué selon la revendication 1 ou 2, présentant un atome d'azote.

**4.** Polymère à base de diène conjugué selon l'une quelconque des revendications 1 à 3, présentant un atome de silicium.

**5.** Polymère à base de diène conjugué selon l'une quelconque des revendications 1 à 4, présentant un groupe modificateur.

**6.** Polymère à base de diène conjugué selon la revendication 5, dans lequel le groupe modificateur présente un atome d'azote, et un rapport de modification du polymère à base de diène conjugué est de 70 % en masse ou plus.

**7.** Polymère à base de diène conjugué selon l'une quelconque des revendications 1 à 6, présentant une structure polymère en étoile présentant 3 ramifications ou plus,
dans lequel au moins une chaîne ramifiée de la structure polymère en étoile présente au moins une portion dérivée d'un monomère à base de vinyle contenant un groupe alcoxysilyle ou un groupe halogénosilyle, et est en outre

ramifiée dans la portion.

**8.** Polymère à base de diène conjugué selon la revendication 7,

dans lequel au moins l'une des portions chacune dérivée d'un monomère à base de vinyle contenant un groupe alcoxysilyle ou un groupe halogénosilyle est une portion dérivée d'un composé représenté par la formule (1) ou (2) suivante :

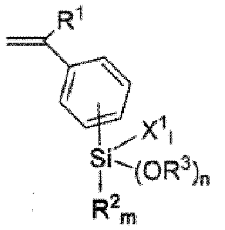

(1)

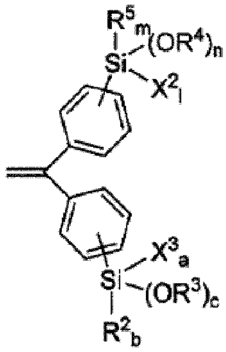

(2)

dans lequel dans la formule (1), $R^1$ représente un atome d'hydrogène, un groupe alkyle présentant 1 à 20 atomes de carbone, ou un groupe aryle présentant 6 à 20 atomes de carbone, et peut présenter une structure ramifiée dans une partie de celui-ci ;
$R^2$ et $R^3$ représentent chacun indépendamment un groupe alkyle présentant 1 à 20 atomes de carbone, ou un groupe aryle présentant 6 à 20 atomes de carbone, et peuvent présenter une structure ramifiée dans une partie de ceux-ci ;
$X^1$ représente chacun indépendamment un atome d'halogène ;
m représente un nombre entier de 0 à 2, n représente un nombre entier de 0 à 3, l représente un nombre entier de 0 à 3 ; et
une somme de m, n et l vaut 3 ; et
dans la formule (2), $R^2$, $R^3$, $R^4$ et $R^5$ représentent chacun indépendamment un groupe alkyle présentant 1 à 20 atomes de carbone, ou un groupe aryle présentant 6 à 20 atomes de carbone, et peuvent présenter une structure ramifiée dans une partie de ceux-ci ;
$X^2$ et $X^3$ représentent chacun indépendamment un atome d'halogène ;
m représente un nombre entier de 0 à 2, n représente un nombre entier de 0 à 3, l représente un nombre entier de 0 à 3 ;
une somme de m, n et l vaut 3 ;
a représente un nombre entier de 0 à 3, b représente un nombre entier de 0 à 2, c représente un nombre entier de 0 à 3 ; et
une somme de a, b et c vaut 3.

**9.** Polymère à base de diène conjugué selon la revendication 8, dans lequel au moins l'une des portions chacune dérivée d'un monomère à base de vinyle contenant un groupe alcoxysilyle ou un groupe halogénosilyle est une portion dérivée d'un composé représenté par la formule (1) dans lequel $R^1$ est un atome d'hydrogène, et m vaut 0.

**10.** Polymère à base de diène conjugué selon la revendication 8, dans lequel au moins l'une des portions chacune dérivée d'un monomère à base de vinyle contenant un groupe alcoxysilyle ou un groupe halogénosilyle est une portion dérivée d'un composé représenté par la formule (2) dans lequel m vaut 0, et b vaut 0.

11. Polymère à base de diène conjugué selon la revendication 8, dans lequel au moins l'une des portions chacune dérivée d'un monomère à base de vinyle contenant un groupe alcoxysilyle ou un groupe halogénosilyle est une portion dérivée d'un composé représenté par la formule (1) dans lequel $R^1$ est un atome d'hydrogène, m vaut 0, l vaut 0, et n vaut 3.

12. Polymère à base de diène conjugué selon la revendication 8, dans lequel au moins l'une des portions chacune dérivée d'un monomère à base de vinyle contenant un groupe alcoxysilyle ou un groupe halogénosilyle est une portion dérivée d'un composé représenté par la formule (2) dans lequel m vaut 0, l vaut 0, n vaut 3, a vaut 0, b vaut 0, et c vaut 3.

13. Procédé de production du polymère à base de diène conjugué selon l'une quelconque des revendications 1 à 12, comprenant :
une étape d'obtention d'un polymère à base de diène conjugué présentant une structure ramifiée par ajout d'un agent de ramification pendant la polymérisation d'au moins un composé de diène conjugué et un composé de vinyle aromatique avec un composé de lithium organique utilisé comme initiateur de polymérisation.

14. Procédé de production du polymère à base de diène conjugué selon la revendication 13, comprenant en outre une étape d'obtention d'un polymère à base de diène conjugué modifié par réaction d'un modificateur de couplage avec le polymère à base de diène conjugué présentant une structure ramifiée.

15. Composition de polymère à base de diène conjugué, comprenant 100 parties en masse du polymère à base de diène conjugué selon l'une quelconque des revendications 1 à 12, et 1,0 partie en masse ou plus et 60 parties en masse ou moins d'un plastifiant de caoutchouc.

16. Composition de caoutchouc, comprenant un composant de caoutchouc, et 5,0 parties en masse ou plus et 150 parties en masse ou moins d'une charge par rapport à 100 parties en masse du composant de caoutchouc,
dans lequel le composant de caoutchouc comprend 10 parties en masse ou plus du polymère à base de diène conjugué selon l'une quelconque des revendications 1 à 12 ou de la composition de polymère à base de diène conjugué selon la revendication 15 par rapport à 100 parties en masse d'une quantité totale du composant de caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3617237 A1
- JP 2005290355 A
- JP H11189616 A
- JP 2003171418 A
- JP 6512240 B
- JP 59140211 A
- JP 428704 A
- JP 436636 A
- JP 63004841 A
- JP 1037970 A
- JP 1053851 A
- JP 2009041 A
- JP 8109219 A


### Non-patent literature cited in the description


- **R. R. HAMPTON.** *Analytical Chemistry,* 1949, vol. 21, 923
- **I. M. KOLTHOFF et al.** *J. Polym. Sci.,* 1946, vol. 1, 429
- **TANAKA et al.** *Polymer,* 1981, vol. 22, 1721
- *Kautschuk Gummi Kunststoffe,* 1999, vol. 52 (12), 799